# NEW EUROPEAN PATENT SPECIFICATION

(11) **EP 0 412 793 B2**
(45) Date of publication and mention of the opposition decision: **11.07.2001**
(45) Mention of the grant of the patent: 28.09.1994
(21) Application number: 90308715.3
(22) Date of filing: 08.08.1990
(51) Int. Cl.: F25J 3/04

(54) **Process and apparatus for producing nitrogen from air**
Verfahren und Vorrichtung zur Herstellung von Stickstoff aus Luft
Procédé et dispositif pour la production d'azote à partir d'air

(30) Priority: 11.08.1989 US 392816
(43) Date of publication of application: 13.02.1991
(73) Proprietor: THE BOC GROUP, INC., Murray Hill, New Jersey 07974 (US)
(72) Inventor: Parker, Clayton E., Somerset, New Jersey 08873 (US); Mostello, Robert A., Somerville, New Jersey 08876 (US)
(74) Representative: Wickham, Michael

(56) References cited:
- EP-A- 0 186 843
- EP-A- 0 241 817
- EP-A- 0 343 065
- DE-A- 2 261 234
- DE-A- 3 706 733
- FR-A- 2 305 700
- GB-A- 694 904
- GB-A- 1 463 075
- GB-A- 1 523 434
- SU-A- 1 451 497
- US-A- 2 499 043
- US-A- 3 203 193
- US-A- 4 357 153
- US-A- 4 400 188
- US-A- 4 595 405
- US-A- 4 654 063
- US-A- 4 848 996
- US-A- 4 867 773
- US-A- 4 872 893

## Description

### Description for the following Contracting States : GB, SE, LI, CH, BE, AT, LU

The present invention is directed to a cryogenic process and apparatus for the separation of air to produce gaseous nitrogen and optionally liquid nitrogen.

Processes for the separation of air to produce nitrogen are known, as disclosed for example, in US-A-3.203,193 and US-A-3,217,502. These processes provide for the operation of a single distillation column at a slightly higher pressure than the product delivery pressure to separate a gaseous nitrogen product. Oxygen-enriched liquid air is withdrawn from the distillation column and is vaporised. Refrigeration is provided by further expanding the vaporised oxygen enriched air, also termed "waste nitrogen". Such methods are able to recover up to about 35 to 40 mole percent of the feed air as nitrogen product.

US-A-4,400,188, discloses the use of a heat pump to separate nitrogen. The process, however, is only cost effective for the production of very large quantities of nitrogen, e.g. 424,500 to 5,660,000 standard m³ per day (15 to 200 million standard cubic feet/day (SCFD)). To enhance separation the process uses overhead vapour recompression which requires complex and costly equipment making It uneconomical for recoveries in the range of less than about 424,500 sm³ (15 million SCFD).

US-A-4 595 405 discloses a process for separating nitrogen from air in a single distillation column. A stream of oxygen-enriched liquid is withdrawn from the bottom of the distillation column. A part of the stream is vaporised, is warmed to about ambient temperature. and is separated by membranes into permeate and reject streams. The reject stream is recompressed and returned to the distillation column. The permeate stream is typically vented from the process. The process disclosed in US-A-4 595 405 is disadvantageous in that it requires the additional cost and complexity of a membrane separation unit and in that the vented permeate gas stream will inevitably include nitrogen with the result that some nitrogen is not recovered.

Such systems characteristically recover only about 35-45 mole percent of the feed air as nitrogen product. It is an aim of the invention to provide processes and apparatuses whereby the mole percent recovery of nitrogen from the feed air is able to be significantly increased.

According to the presentinvention there is provided a process for the recovery of substantially pure nitrogen product atsuperatmosphericpressure from air comprising the steps of:
(a) compressing gaseous feed air;
(b) cooling the compressed air in a heat exchanger by heat exchange with enriched oxygen and nitrogen product streams;
(c) introducing the cooled and compressed air to an intermediate stage of a single distillation column;
(d) separating the air in the column into a substantially pure gaseous nitrogen overhead fraction and an oxygen enriched liquid bottoms fraction and withdrawing a stream of each fraction from the column;
(e) forwarding substantially all of the oxygen enriched liquid bottoms stream and a portion of the gaseous nitrogen overhead stream to a condenser and therein indirectly exchanging heat between the bottoms stream and overhead stream thereby boiling oxygen enriched liquid to form an oxygen-enriched gas stream and condensing gaseous nitrogen to form a liquid nitrogen stream;
(f) recycling at least a major portion of the resulting liquid nitrogen stream to the top of the distillation column as reflux;
(g) compressing a first portion of the oxygen-enriched gas stream and recycling the compressed first portion of the oxygen enriched gas stream to the bottom of the distillation column without changing the composition of the oxygen-enriched gas outside the distillation column either upstream or downstream of the compression of said first portion, thereby enhancing nitrogen product recovery from the air;
(h) warming the remainder of the gaseous nitrogen overhead stream in the heat exchanger by said heat exchange with the compressed air;
(i) recovering the warmed nitrogen overhead stream as a substantially pure nitrogen product from the heat exchanger; and
(j) turboexpanding a second portion of the said oxygen enriched gas stream in an expanding means thereby generating work output, wherein: the first portion of the oxygen enriched gas stream of step (g) starts its compression at about a temperature of the distillation column, and at least a portion of the work output obtained from the expanding means is utilised to compress the first portion of the oxygen-enriched gas stream which is recycled to the bottom of the distillation column.

The invention also provides an apparatus for the production of nitrogen product from air comprising:
(a) a first compressor for increasing the pressure of gaseous feed air;
(b) a heat exchanger for cooling the high pressure air with nitrogen and oxygen enriched products of distilled feed air;
(c) a distillation column for separating the cooled air into a substantially pure gaseous nitrogen overhead fraction and an oxygen-enriched liquid bottom fraction and having an outlet for the nitrogen communicating with the heat exchanger;
(d) a condenser for at least partially condensing a stream of the gaseous nitrogen overhead to form a liquid nitrogen stream by indirect heat exchange with a stream of the oxygen-enriched liquid bottoms fraction to form an oxygen-enriched gas stream;
(e) a first recycle means for returning a major portion of the liquid nitrogen stream from the condenser to the distillation column as reflux;
(f) a second compressor for increasing the pressure of at least part of the oxygen enriched gas stream, such that in use it receives oxygen-enriched gas at a cryogenic temperature; and
(g) a second recycle means for returning the increased pressure oxygen-enriched gas stream to the bottom of the distillation column thereby enabling nitrogen product recovery to be enhanced there being no means intermediate the distillation column and the inlet of the second compressor or intermediate the outlet of the second compressor and the distillation column for changing the composition of the oxygen-enriched gas;
wherein the nitrogen product is able to be recovered from the said heat exchanger; the apparatus further comprises a turbo-expander for expanding a second part of the oxygen-enriched gas stream; the second compressor is coupled to the turboexpander so as, in use, to utilise at least a portion of the work output obtained from the turboexpander to compress the first part of the oxygen-enriched gas strean which is recycled to the bottom of the distillation column; and the second compressor is in a location in the apparatus such that in operation it receives oxygen-enriched gas at a cryogenic temperature.

Pure nitrogen product is produced by the invention at considerably less power than conventional systems employing a single distillation column. Also, liquid nitrogen may be recovered as a product.

The compressed air stream that is cooled in a heat exchanger against the nitrogen product stream and oxygen-enriched gas stream which are warmed is optionally treated to remove impurities such as in a reversing heat exchanger. Alternatively, molecular sieve may be used to remove impurities prior to forwarding the air to a non-reversing heat exchanger.

In accordance with an alternative aspect of the invention, the first portion of the 'waste nitrogen' (oxygen-enriched gas) is sent to a cold compressor without first being warmed to ambient temperature. Also, a portion of the work output from the turboexpander may be supplied to the cold compressor. Alternatively, even higher outputs of nitrogen product can be achieved by using all of the work output from the turboexpander to operate the cold compressor. In this case, refrigeration is supplied to the system from an external source such as additional liquid nitrogen being provided to the distillation column.

The method and apparatus according to the invention are now described by way of example with reference to the accompanying drawings, in which:
FIGURE 1 is a schematic flow diagram of a first comparative embodiment of a nitrogen generator using a plurality of heat exchangers including a reversing heat exchanger wherein the entire waste nitrogen stream is warmed, and a portion of the warmed product is compressed and returned to the distillation column;
FIGURE 2 is a schematic flow diagram of embodiment of a second comparative a nitrogen generator which operates a warm compression cycle using one less heat exchanger;
FIGURE 3 is a schematic flow diagram of a third comparative embodiment of the warm compression cycle using molecular sieve for air purification;
FIGURE 4 is a schematic flow diagram of a first embodiment of the invention using cold compression of the waste nitrogen recycle flow wherein at least a portion of the work output from the expander is used to operate the cold recycle compressor; and
FIGURE 5 is a schematic flow diagram of a second embodiment of the invention using cold compression of the waste nitrogen recycle flow by means of the total available shaft work from the turboexpander, wherein refrigeration is supplied by an external source.

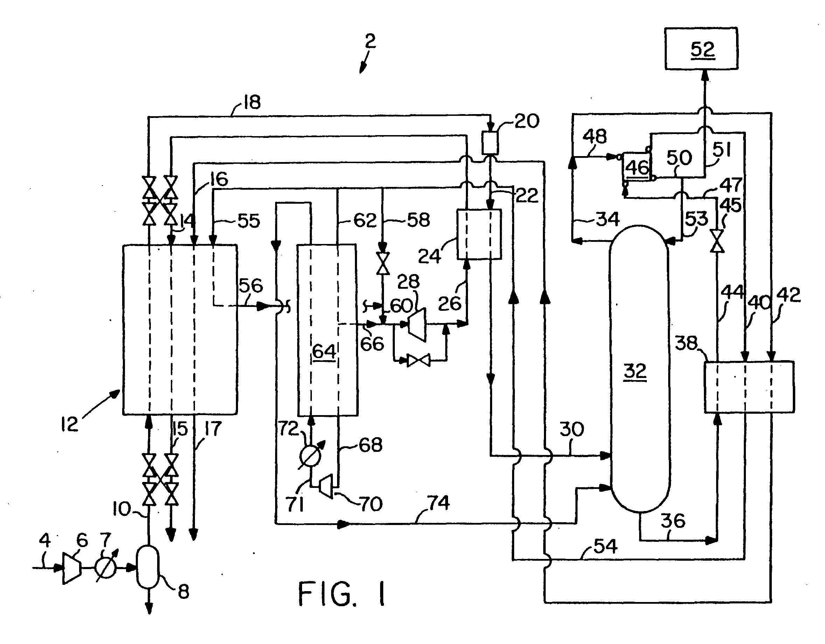

Referring to Figure 1 of the drawings, a nitrogen recovery system 2 provides for a stream of feed air 4 to be fed into a compressor 8. The resuiting compressed air stream is forwarded to an aftercooler 7 for the purposes of cooling and condensing water vapour. Thereafter, the condensate is removed in a separator 8 and an air stream now indicated by the reference 10 exits the separator 8. The air stream 10 passes through heat exchanger 12 where the air stream is cooled by heat exchange with an oxygen-enriched gas stream 14 and nitrogen product stream 16. In the embodiment shown in Figure 1, heat exchanger 12 is a reversing heat exchanger in which air passages are periodically switched with waste nitrogen passages so that water and carbon dioxide deposited In solid form from the air are evaporated after a switch of the passages into the waste nitrogen stream. Appropriate valves and conduits are provided to enable the air and waste nitrogen passages to be so switched.

The cooled air stream leaving the heat exchanger 12, and now shown by the reference 18, enters an (optional) gas phase absorber 20 which absorbs impurities such as any residual carbon dioxide and hydrocarbons therefrom, The resulting filtered air stream now indicated by the reference 22 proceeds to an (optional) heat exchanger 24 where the air is further cooled against the countercurrant flow of oxygen enriched gas stream 28 from a turbo-expander 28.

The resulting cooled air stream now indicated by reference 30 exiting heat exchanger 24, is near saturation and may be partly in its liquid state. This stream enters a distillation column 32 at an intermediate (liquid-vapour contact or mass transfer) stage. The cooled air stream 30 is separated by (fractional) distillation into a substantially pure gaseous nitrogen overhead (fraction), a stream 34 of which exits at the top of the column 32, and a liquid oxygen-enriched fraction, a stream 36 of which passes out of the bottom of the column 32. The liquid stream 36 is cooled by passage through an (optional) heat exchanger 38 against (i.e. countercurrently to) an oxygen enriched gas stream 40 and nitrogen product gas stream 42. The resulting cooled oxygen-rich liquid stream now indicated by reference 44 passes through valve 45, its pressure thereby being reduced, and then via line 47 to condenser 46 where it boils while condensing a portion or sub-stream 48 of the gaseous nitrogen overhead stream 34 through indirect heat exchange. (The stream 34 of nitrogen is divided into two portions or sub-streams, one of which is the sub-stream 48 and the other of which is the stream 42 that is passed through the heat exchanger 38 countercurrently to the liquid oxygen stream 36, thereby being warmed. This other stream of nitrogen leaves the heat exchanger 38 (and is now indicated by the reference 54) and is then warmed to ambient temperature by passage through the heat exchanger 12 and thereafter is passed via line 17 out of the system 2 for use as product nitrogen.)

The condensed liquid nitrogen exits condenser 46 as a stream 50 of liquid. The stream 50 is then split, and a portion or sub-stream 51 is optionally collected in a conventional storage facility 52. The major portion, however, of the condensed liquid nitrogen stream 50 returns via line 53 to the distillation column 32 where it serves as reflux.

A first portion or sub-stream 55 of the oxygen-enriched gas stream 54 exiting heat exchanger 38 is heated by passage through heat exchanger 12, where it serves to cool the feed air stream 10. The gas stream 55 leaves the heat exchanger 12 at a position intermediate the ends of the heat exchanger 12 and flows through a (pipe) line 56. A second portion or sub-stream 58 of the oxygen-enriched gas stream 54 by-passes heat exchanger 12, and combines with the warmed gas flowing through line 56. The combined gas stream indicated by reference 60 enters a turboexpander 28 and expands to nearly atmospheric pressure producing refrigeration required to keep the system 2 cold. Some of the second portion or sub-stream 58 may by-pass the turboexpander 28 and be reunited with the rest of this sub-stream immediately downstream of the outlet of the turboexpander 28. The expanded gas stream exiting the turboexpander 28 (now indicated by the reference 26) is used to cool the incoming air, first by passage through heat exchanger 24. The oxygen-enriched gas stream, now indicated by reference 16, leaves the heat exchanger 24 and provides further cooling for the air by passage through the heat exchanger 12. The oxygen-enriched gas stream exiting heat exchanger 12 is shown as stream 15.

A third portion or sub-stream 62 of the oxygen-enriched gas stream is warmed by passage through a heat exchanger 64, preferably to ambient temperature. A portion or sub-stream 66 of the stream 62 is withdrawn from the heat exchanger 24 at a temperature intermediate those of the cool and warm ends thereof and is united with the gas stream 60 that enters the turboexpander 28. The remainder of the stream 62 continues its passage through the heat exchanger 64 and exits the warm end of the heat exchanger 64. The oxygen-enriched gas stream (now indicated by the reference 68) is compressed in compressor 70 to a pressure about equal to or slightly greater than the operating pressure of the distillation column 32. The resulting compressed gas stream, now indicated by reference 71, is cooled in an after cooler 72, further cooled to a low temperature by being returned through heat exchanger 64 from its warm to its cold end, and recycled via a line 74 to the bottom of the distillation column 32 where it serves as "boil up", thus increasing the nitrogen recovery possible from the feed air. The addition of the feed air stream 30 at an intermediate stage and recycled oxygen-enriched gas stream at the bottom of the column 32 permits the mass transfer stages between the inlets for these two streams to be used as a stripping section.

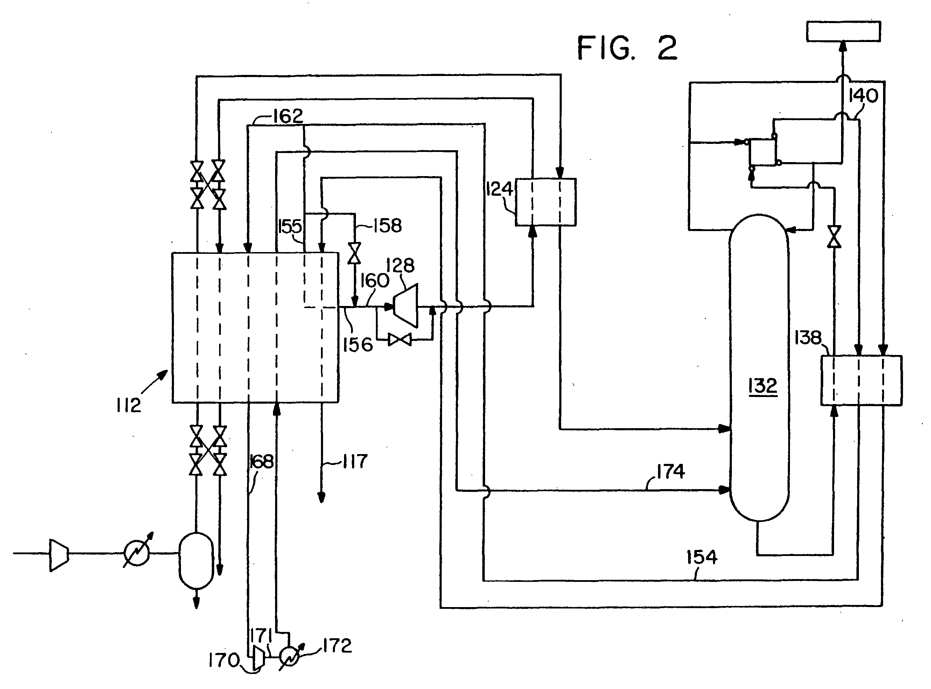

In the embodiment shown in FIGURE 2. a single heat exchanger performs the functions of the heat exchangers 12 and 64 of Figure 1. The single heat exchanger is indicated by the reference 112 in Figure 2. In all other respects, the embodiment shown in Figure 2 is the same as that shown in Figure 1, but before purposes of clarity the flow of the oxygen-enriched gas stream leaving the condenser above the distillation column is now described.

The oxygen-enriched stream 140 is warmed by passage through an optional heat exchanger 138. The warmed gas stream now indicated by reference 154 is divided into three portions or sub-streams. A first portion or sub-stream 155 of the oxygen enriched gas stream 154 is warmed in passage through the heat exchanger 112. The warmed gas stream leaves the heat exchanger at a position between the ends thereof through a line 156. A second portion or sub-stream of the oxygen-enriched gas stream 158 by-passes the heat exchanger 112 and combines with the first portion or sub-stream 155 in the line 160. The combined stream enters turboexpander 128 and is expanded to nearly atmospheric pressure to provide refrigeration, and exits the system via optional heat exchanger 124 and the main reversing heat exchanger 112.

A third portion or sub-stream 162 of the oxygen-enriched gas stream 154 passes completely through the heat exchanger 112 and, now indicated by reference 168, flows into the compressor 170. The resulting compressed gas stream, now indicated by reference 171, is then passed through an after cooler 172, back through heat exchanger 112, and then via line 174 to the bottom of distillation column 132.

In Figure 2, the stream of nitrogen product withdrawn from the heat exchanger 112 is indicated by the reference 117.

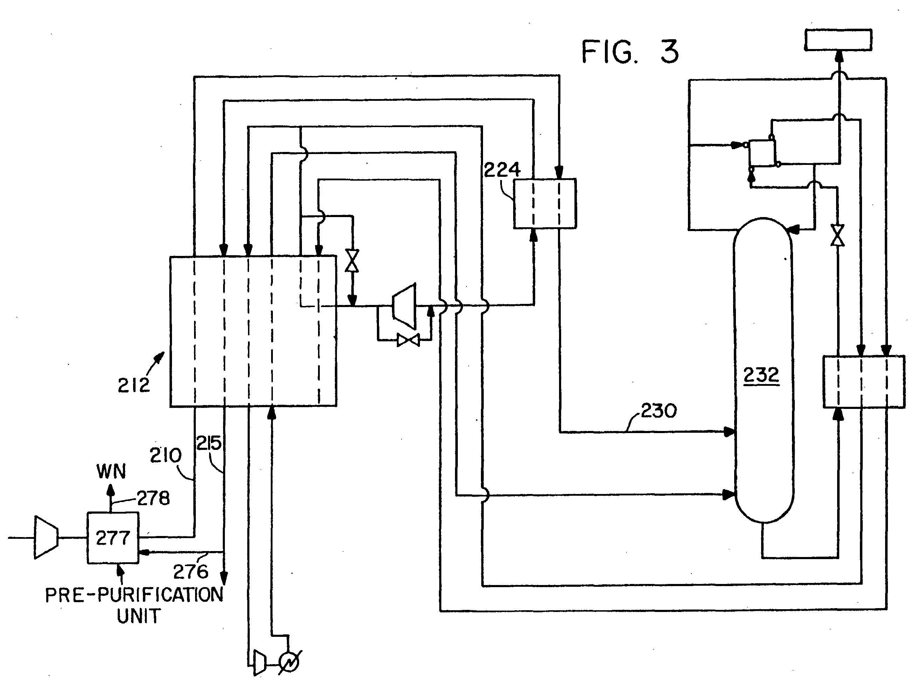

Referring to Figure 3 of the drawings, there is illustrated an embodiment of the invention generally similar to that shown in Figure 2, but in which purification of the feed air occurs outside of any heat exchanger and therefore no heat exchanger of the reversing kind is employed. A compressed feed air stream is passed to a pre-purification unit 277 which typically contains beds of molecular sieves of zeolitic material which is able to be regenerated and which removes impurities such as carbon dioxide, some hydrocarbons and water vapour. A purified air stream 210 passes through the heat exchanger 212, through optional heat exchanger 224, and into the bottom of distillation column 232 via line 230.

In addition, the embodiment shown in Figure 3 differs from that shown in Figure 2 with respect to the treatment of the waste oxygen-enriched gas stream ("waste nitrogen") passing through the heat exchanger 212. A portion or sub-stream 276 of the waste nitrogen stream 215 is sent to the pre-purification unit 277 to serve as regeneration gas, which is normally heated before entering the pre-purification unit 277, and exits line 278. In operation, a first group of the beds of unit 277 is used to adsorb impurities from the incoming air, while the remaining beds are regenerated. Once the first group becomes appropriately laden with impurities, the flow of air is switched to the remaining beds, and the first group regenerated. Thus, continuous operation of the unit 277 is made possible.

The embodiments shown in Figures 1 to 3 are all directed to compression of a warm oxygen-enriched gas stream. That is, the waste nitrogen stream (which is enriched in oxygen) is warmed to essentially ambient temperature by passage through a heat exchanger before being compressed and recycled to the distillation column. These embodiments all improve nitrogen recovery over that possible without compression of a recycle waste nitrogen stream. Processes and apparatuses according to the invention employ "cold compression" of the waste nitrogen as a means of achieving improved recoveries in an efficient manner. Such embodiments use firstly excess refrigeration energy available in the turboexpanded stream of the waste gas and secondly the shaft work economy that can be achieved when compressing a gas in cold state. Typically, in plants in which the distillation column operating pressure is at least 100 psig, there is enough energy available in the turboexpansion of the waste nitrogen to cover the normal refrigeration needs of the plant and to compress a substantial amount of the waste gas recycle stream in order to increase nitrogen recovery. Such a scheme minimises the amount of equipment which needs to be installed, for example, a compressor wheel can be driven off the turboexpander shaft, and heat exchange passes for warming the waste gas recycle stream to ambient temperature prior to compression and then cooling the compressed stream to low temperature following compression are eliminated. Of course, any such process which uses expansion of waste nitrogen to drive a compressor will reduce the amount of waste nitrogen available for turboexpansion. At some point, nitrogen recovery by compression of recycling oxygen-enriched gas is maximised while sufficient such gas remains available to cover both the refrigeration needs of the plant and to supply the energy for the cold compressor. This "equilibrium point" depends upon the column operating pressure, the refrigeration needs of the plant, i.e. relating to its size and any liquid production requirements, the efficiencies of both the turboexpander and the cold compressor. There are other factors, eg, frictional pressure drops, and choice of temperatures of the fluids flowing into both the turboexpander and the cold compressor, which also have a bearing on the equilibrium point.

The shaft output of the turboexpander is used to accomplish two distinct tasks:
(1) driving a cold compressor of the waste nitrogen which is recycled to the distillation column, thereby improving the nitrogen recovery from the air feed to the distillation column, and
(2) removing energy (as heat) from the cold process equipment by delivering a portion of the shaft energy to a dissipative brake in the surroundings.

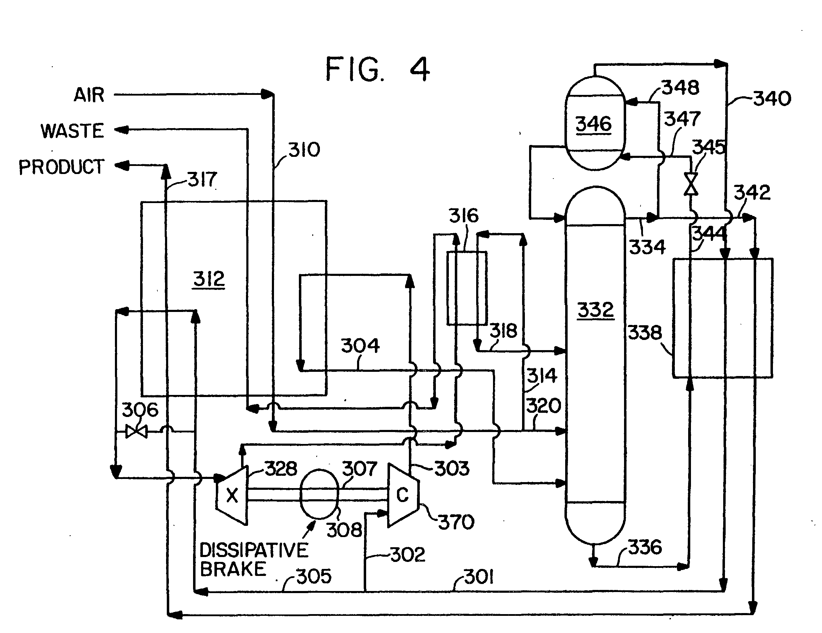

The embodiment illustrated in Figure 4 of the drawings shows the recycle of cold oxygen-enriched gas, i.e. oxygen-rich gas that is compressed in its cold state without being warmed to ambient temperature in a heat exchanger. More specifically, a compressed and purified feed air stream 310 is cooled by passage through a heat exchanger 312. A portion or subsidiary stream 314 of the cooled air stream 310 is passed through an optional heat exchanger 316 in which it is further cooled and condensed before passing via line 318 into an intermediate stage of a distillation column 332. Asecond portion or subsidiary stream 320 of the cooled air stream 310 is passed directly to another, but lower, intermediate stage of the distillation column 332.

Air entering distillation column 332 is separated into a substantially pure gaseous nitrogen overhead exiting from the top of column 332 as stream 334 and an oxygen-enriched liquid bottom stream 336 exiting from the bottom of the column 332. The liquid stream 336 is cooled by passage through a heat exchanger 338 against a return oxygen-enriched gas stream 340 and a subsidiary or product stream 342 of nitrogen gas which is taken from the stream 334. The resulting cooled oxygen-enriched liquid stream, now indicated by reference 344, is reduced in pressure by passage through valve 345, and enters condenser 346 via line 347. The oxygen-enriched liquid stream boils in the condenser 346 while condensing a portion or sub-stream 348 of the gaseous nitrogen product stream 334 through indirect heat exchange. The condensed nitrogen is returned to the distillation column 332 to serve as reflux.

Resulting boiled oxygen-enriched gas is withdrawn as a stream 340 from the condenser 346 and is optionally warmed by passage through the heat exchanger 338. The stream of warmed oxygen-enriched gas leaving the heat exchanger 338, now indicated by the reference 301, is divided into three portions or sub-streams. One portion 302 of the oxygen-enriched gas stream 301 is not further warmed by heat exchange but enters a compressor 370 in which it is compressed. The resulting compressed gas stream, now indicated by reference 303, is then returned via line 304 to the bottom of distiliatlon column 332 after being cooled by passage through heat exchanger 312 from a first intermediate region thereof at a relatively high temperature to a second intermediate region thereof at a relatively low temperature. A second portion or sub-stream 305 of the gas stream 301 is passed to the turboexpander 328 after passing through the heat exchanger 312 from its cold end to an intermediate region thereof. A third portion or sub-stream may by-pass the heat exchanger 312 via valve 306. The expanded gas stream leaving the turboexpander 328 passes through the heat exchanger 316 from its cold end to its warm end thereby providing cooling for the air Stream 314. and then through the heat exchanger 312 from its cold end to its warm end thereby providing cooling for the incoming air stream 310. The stream 342 after passage through the heat exchanger 338 also passes through the heat exchanger 338 also passes through the heat exchanger 312 from its cold end to its warm end thereby exchanging heat for the air stream 310. The resulting warmed nitrogen stream now indicated by reference 317 is taken as nitrogen product.

Of particular importance to this embodiment is that a shaft connection 307 is provided between the turboexpander 328 and the compressor 370. A portion of the work output of the turboexpander 328 is thus used to drive the compressor 370 thereby providing "boil up" flow distillation column 332 which enhances the recovery of the nitrogen product Stream 317. Part of the work output is directed to a dissipatlve brake 308 to remover heat from the system and reject this heat to the surroundings, By the term "surroundings" is meant outside the boundaries of the cold box (not shown) in which the parts of the apparatus operating at cryogenic temperatures are located. The dissipative brake 308 may be a compressor, a pump, electrical generator, or like device, or even friction in the bearings of a rotating part It is important that the system directs requisite energy to the surroundings to keep the cold compression process refrigerated.

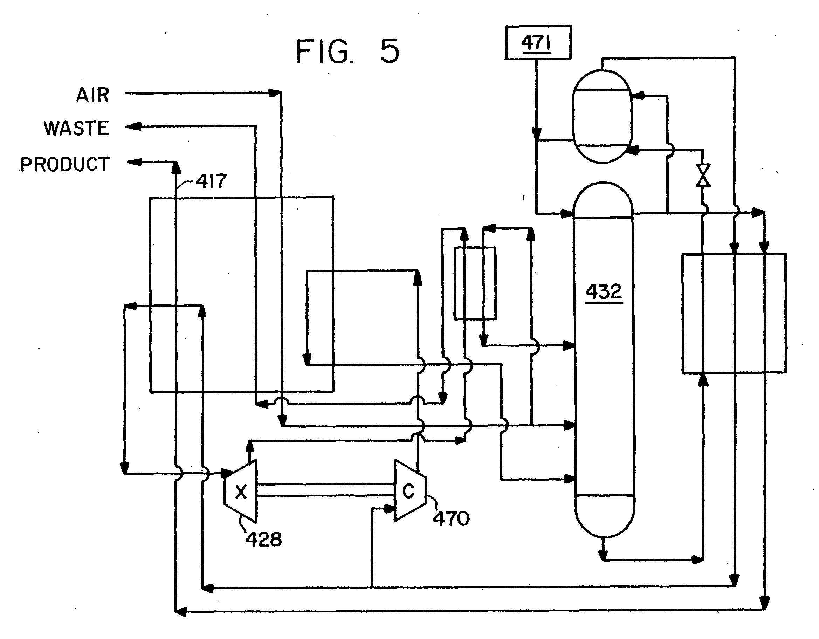

Whereas the process shown In Figure 4 requires some of the turboexpander shaft output to supply a "dissipative" brake to refrigerate the plant the process shown In Figure 5 of the drawings needs no dissipative brake because some of its refrigeration is provided from an outside source. The entire shaft output of the turbocompressor can be applied to driving a compressor; thus even higher recoveries of nitrogen from the air fed to the distillation column are achievable. In all other respects, the embodiment of the invention illustrated in Figure 5 is the same as that illustrated in Figure 4. In such use of cold compression, shown in Figure 5, all of the available work output of the turboexpander 428 is supplied to a compressor 470. This enables a higher recovery of nitrogen product 417 to be obtained because an even greater boil up flow is achievable in column 432. In this event refrigeration needs to be supplied to the system, for example. by supplying liquid nitrogen to the distillation column 432 from an external source 471, and there is no intentional dissipative brake.

If the external source 471 of refrigeration for the process of Figure 5 is liquid nitrogen at or near the purity of the desired gaseous product of the plant, a proportional increase in gaseous nitrogen product the plant can result. The amount of refrigeration from an external source is a function of the heat leak and enthalpies associated with the fluid flows at the cold box boundaries.

The cold waste nitrogen compression is achieved by coupling the compressor 470 to the turbosxpander 428 output exdusively, which is made possible by providing an external source of refrigeration. Such a scheme gains commercial attractiveness as the cost of supplying refrigerating substances 471 (e.g. liquid nitrogen) has diminished as producing plants for these liquids has become larger and more efficient.

The increase in nitrogen recovery made possible by dedicating the total output of the turboexpander 428 to recycle waste nitrogen compression further increases the amount of nitrogen gas per unit of liquid refrigerant 471 supplied, and therefore the economic return of the plant.

Another advantage of the process shown in Figure 5 is that only two cold machines are required, preferably connected by a common shaft. The additional mechanical complication of the dissipative device of FIGURE 4 is eliminated.

In the plants shown in Figures 4 and 5, pre-purification of feed air is a preferred alternative to a reversing heat exchanger.

In another example of the use of cold compression (not shown), the energy for such compression comes from an external source. e.g., an electric motor. The electric motor is an external requirement and increases the refrigeration needs of the plant. However, these are also met by the turboexpander which is free of the necessity of supplying shaft energy to the cold compressor. Once again, however, as cold compression increases the recovery of nitrogen, the amount of waste nitrogen available for turboexpansion is reduced. When this is reduced to the quantity required to meet the refrigeration needs of the plant (including that from the external energy source driving the cold compressor), then the maximum recovery of nitrogen has been reached.

### EXAMPLE 1 (COMPARATIVE)

A process for the recovery of substantially pure nitrogen at the rate of 3113 standard cubic metres per hour (SCMH) (110,000 standard cubic feet per hour (SCFH)) at 790.7 kPa (114.7 psia) is conducted in accordance with FIGURE 1. SCMH and SCFH refer to a substance measured as a gas at at 101.3 kPa and 21°C (14.7 psia and 70°F).

A feed air flow of 5240.3 SCMH (185,169 SCFH) was compressed to a pressure of 863.8 kPa (125.3 psia), aftercooled to a temperature of 38°C (100°F), and then cooled in the heat exchanger 12. The cooled air stream was passed via the line 18 at the rate of 5188.4 SCMH (183,336 SCFH) and a temperature of -165.4°C (-265.8°F) to the gas phase absorber 20 for the removal of impurities. The air stream was then cooled by passage through the heat exchanger 24. The cooled air having a liquid content of 0.03 mole percent at -167.6°C and 842.4 kPa (-269.6°F and 122.2 psia) was sent to an elevated tray (i.e. intermediate stage) of the distillation column 32.

Gaseous nitrogen at a pressure of 821.1 kPa (119.1 psia) and a temperature of -172.4°C (-278.4°F) exited from the top of the distillation column 32 and a portion was forwarded to the heat exchanger 38 where the nitrogen was warmed to -166.9°C (-268.5°F). Aflow of 3112 SCMH (109,980 SCFH) was warmed in heat exchanger 12. The final product was cooled at a temperature of 34.8°C (94.6°F) and 813 kPa (118 psia) to give a nitrogen recovery of about 59 mole percent based on total air compressed.

The oxygen enriched gas from condenser 46 passed through the heat exchanger 38 at the rate of 4020 SCMH (142,036 SCFH). A portion of this flow, 1944 SCMH (68,700 SCFH), passed completely through the heat exchanger 64 and was warmed to ambient temperature therein. The warmed gas was then compressed to 850 kPa (123.3 psia) and aftercooled to 37.8°C (100°F). The cooled gas re-entered the heat exchanger 64 and was cooled to -160.7°C (-257.3°F) at a pressure of 844.5 kPa (122.5 psia) for delivery to the bottom of the distillation column 32.

The balance of the oxygen enriched gas leaving the heat exchanger 38 was divided between the heat exchangers 64 and 12 and by-pass line 58 to provide the feed gas to the turboexpander28 and its by-pass, a total of 2075 SCMH (73,336 SCFH), at a pressure of 354.4 kPa (51.4 psia) and temperature of -148.3°C (-235°F). Aflow of 1720 SCMH (60,790 SCFH) of this gas 60 passed through the turboexpander 28 providing requisite refrigeration. The turboexpander exhaust gas and the by-pass was combined into line 26 and warmed in the heat exchangers 24 and 12.

### EXAMPLE 2

A flow of 707.5 SCMH (25,000 SCFH) of nitrogen was produced in accordance with the process described in FIGURE 4 wherein a portion of the work output from the turboexpander 328 was sent to the compressor 370 via the shaft 307 and the balance was transmitted out of the system.

An airflow of 1459 SCMH (51,546 SCFH) was fed at a pressure of 917 kPa (133 psia) through the heat exchanger 312. Then 29.3 SCMH (1036 SCFH) of the cooled air was sent through the heat exchanger 316 for condensing prior to delivery to an intermediate stage of the distillation column 332. The balance of the cooled air entered an elevated tray, below the entry stage of line 318, of the distillation column 332 directly. The products of the distillation column 332 were 1861 SCMH (65,758 SCFH) nitrogen gas, of which 1153 SCMH (40,758 SCFH) was returned as reflux after condensing in condenser 346, and 1025 SCMH (36,211 SCFH) of oxygen rich liquid stream 336. The oxygen rich liquid stream 336 was subcooled in the heat exchanger 338 and throttled through valve to about 469 kPa (68 psia) for boiling in the condenser 346. Both the boiled oxygen rich gas stream 340 and 707.5 SCMH (25,000 SCFH) of the nitrogen (product) stream 342 were warmed in heat exchanger 338. The warmed nitrogen product stream entered the main heat exchanger 312, was warmed to ambient temperature, and exited the system as stream 317.

The oxygen-enriched gas stream was divided into a portion or sub-stream for turboexpansion and a portion or sub-stream for cold compression and recycle to the distillation column, the relative flow rates being 751 and 274 SCMH respectively (26,546 SCFH and 9665 SCFH, respectively). The recycle gas was compressed to 896 kPa (130 psia), cooled in heat exchanger 312 and injected into the bottom of the distillation column 332 for "boil up". The gas stream passed to the turboexpander 328 was first heated partially in heat exchanger 312 and expanded to about 124 kPa (18 psia) in the turboexpander 328. It then passed through heat exchangers 316 and 312, yielding its refrigeration and becoming the waste nitrogen product of the plant.

By these means, a nitrogen recovery of about 48.5 mole percent of the feed air was attained. Various recoveries are achievable by this process, depending on the plant size, cold compressor and turboexpander efficiencies, the operating pressure of the distillation column, the number of trays in the distillation column, and the desired nitrogen purity.

In this Example, part of the shaft work generated by the turboexpander 328 is transmitted to the surroundings and part to the cold compressor 303. Work transmitted to the surroundings by brake 308 constitutes the refrigeration necessary to refrigerate the plant.

### EXAMPLE 3

The same procedure was follows as in Example 2 except that all of the available work output from the turboexpander 428 was used to operate the compressor 470 in order to maximise recovery of nitrogen as illustrated in Figure 5. The cold box being well insulated, 27 SCMH (949 SCFH) of liquid nitrogen was added to the top of the distillation column 432 to provide refrigeration. A feed air stream of 1459 SCMH (51,546 SCFH) was processed in the system to produce up to 849 SCMH (30,000 SCFH) of product nitrogen 417 resulting in a nitrogen recovery rate of about 58 mole percent of the feed air.

The present invention recovers substantially pure nitrogen product, both gas and liquid as desired, on the order of up to 70 mole percent. As plant size decreases, especially below 22640 SCMH (800,000 SCFH), the present invention becomes more cost effective due to the absence of the standard column reboiler and the less expensive heat pump circuit comprising compression equipment.

A single turboexpander is not essential to this embodiment of the invention. If fact, one turboexpander serving the refrigeration needs of the plant and another driving the compressor for recycle to the column in order to provide higher nitrogen recovery is within the scope of the present invention. There are other combinations, in all of which the cold compression step uses shaft energy inherently produced in the process.

### Description for the following Contracting States : DE, FR, IT, NL

The present invention is directed to a cryogenic process and apparatus for the separation of air to produce gaseous nitrogen and optionally liquid nitrogen.

Processes for the separation of air to produce nitrogen are known, as disclosed for example, in US-A-3,203,193 and US-A-3,217,502. These processes provide for the operation of a single distillation column at a slightly higher pressure than the product delivery pressure to separate a gaseous nitrogen product. Oxygen-enriched liquid air is withdrawn from the distillation column and is vaporised. Refrigeration is provided by further expanding the vaporised oxygen enriched air, also termed "waste nitrogen". Such methods are able to recover up to about 35 to 40 mole percent of the feed air as nitrogen product.

US-A-4,400,188 discloses the use of a heat pump to separate nitrogen. The process, however, is only cost effective for the production of very large quantities of nitrogen, e.g. 424,500 to 5,660.000 standard m³ per day (15 to 200 million standard cubic feet/day (SCFD)). To enhance separation the process uses overhead Vapour recompression which requires complex and costly equipment making it uneconomical for recoveries in the range cf less than about 424,500 sm³ (15 million SCFD).

US-A-4 595 405 discloses a process for separating nitrogen from air in a single distillation column. A stream of oxygen-enriched liquid is withdrawn from the bottom of the distillation column. A part of the stream is vaporised, is warmed to about ambient temperature, and is separated by membranes into permeate and reject streams. The reject stream is recompressed and returned to the distillation column. The permeate stream is typically vented from the process. The process disclosed in US-A-4 595 405 is disadvantageous in that it requires the additional cost and complexity of a membrane separation unit and in that the vented permeate gas stream will inevitably include nitrogen with the result that some nitrogen is not recovered.

EP-A-0 343 065 (which forms part of the state of the art by virtue of Article 54(3) EPC) discloses a nitrogen separation process in which an oxygen-enriched stream is withdrawn from the bottom of a single distillation column, is warmed to about ambient temperature, is recompressed and is returned to the distillation column.

It is an aim of the invention to provide processes and apparatuses whereby the mole percent recovery of nitrogen from the feed air per unit power consumed is able to be significantly increased.

According to the present invention there is provided a process for the recovery of substantially pure nitrogen product at superatmospheric pressure from air comprising the steps of:
(a) compressing gaseous feed air;
(b) cooling the compressed air in a heat exchanger by heat exchange with enriched oxygen and nitrogen product streams;
(c) introducing the cooled and compressed air to an intermediate stage of a single distillation column;
(d) separating the air in the column into a substantially pure gaseous nitrogen overhead fraction and an oxygen enriched liquid bottoms fraction and withdrawing a stream of each fraction from the column;
(e) forwarding substantially all of the oxygen enriched liquid bottoms stream and a portion of the gaseous nitrogen overhead stream to a condenser and therein indirectly exchanging heat between the bottoms stream and overhead stream thereby boiling oxygen enriched liquid to form an oxygen-enriched gas stream and condensing gaseous nitrogen to form a liquid nitrogen stream;
(f) recycling at least a major portion of the liquid nitrogen stream to the top of the distillation column as reflux;
(g) introducing a first portion of the oxygen enriched gas stream at a cryogenic temperature into a compressor, compressing said first portion of the oxygen-snriched gas stream, and recycling the compressed first portion of the oxygen enriched gas stream to the bottom of the distillation column thereby enhancing nitrogen product recovery from the air;
(h) warming the remainder of the gaseous nitrogen overhead stream in the heat exchanger by said heat exchange with the compressed air; and
(i) recovering the warmed nitrogen overhead stream as a substantially pure nitrogen product from the heat exchanger;
(j) turboexpanding a second portion of the said oxygen-enriched gas stream in an expanding means thereby generating work output; and

The invention also provides an apparatus for the production of nitrogen product from air comprising:
(a) a first compressor for increasing the pressure of gaseous feed air;
(b) a heat exchanger for cooling the high pressure air with nitrogen and oxygen-enriched products of distilled feed air;
(c) a distillation column for separating the cooled air into a substantially pure gaseous nitrogen overhead fraction and an oxygen-enriched liquid bottom fraction and having an outlet for the nitrogen communicating with the heat exchanger;
(d) a condenser for at least partially condensing a stream of the gaseous nitrogen overhead to form a liquid nitrogen stream by indirect heat exchange with a stream of the oxygen-enriched liquid bottoms fraction to form an oxygen-enriched gas stream;
(e) a first recycle means for returning a major portion of the liquid nitrogen stream from the condenser to the distillation column as reflux;
(f) a second compressor for increasing the pressure of a first part of the oxygen enriched gas stream. the second compressor being positioned such that in use it receives oxygen-enriched gas at a cryogenic temperature; and
(g) a second recycle means for returning the increased pressure oxygen-enriched gas stream to the bottom of the distillation column thereby enhancing nitrogen product recovery; wherein in use the nitrogen product is recovered from the said heat exchanger and the apparatus further comprises a turboexpander for expanding a second part of the oxygen-enriched gas stream, the second compressor being coupled to the turboexpander so as, in use, to utilise at least a portion of the work output obtained from the turboexpander to compress the first part of the oxygen-enriched gas stream which is recycled to the bottom of the distillation column.

Pure nitrogen product is produced by the invention at considerably less power than conventional systems employing a single distillation column. Also, liquid nitrogen may be recovered as a product.

The compressed air stream that is cooled in a heat exchanger against the nitrogen product stream and oxygen-enriched gas stream which are warmed is optionally treated to remove impurities such as in a reversing heat exchanger. Alternatively, molecular sieve may be used to remove impurities prior to forwarding the air to a non-reversing heat exchanger.

In accordance with the invention, the first portion of the 'waste nitrogen' (oxygen-enriched gas) is sent to a cold compressor without first being warmed to ambient temperature. Also, a portion of the work output from the turboexpander may be supplied to the cold compressor. Alternatively, even higher outputs of nitrogen product can be achieved by using all of the work output from the turboexpander to operate the cold compressor. In this case, refrigeration is supplied to the system from an external source such as additional liquid nitrogen being provided to the distillation column.

The method and apparatus according to the invention are now described by way of example with reference to the accompanying drawings, in which:
FIGURE 1 is a schematic flow diagram of a first comparative embodiment of a nitrogen generator using a plurality of heat exchangers including a reversing heat exchanger wherein the entire waste nitrogen stream is warmed, and a portion of the warmed product is compressed and returned to the distillation column;
FIGURE 2 is a schematic flow diagram of embodiment of a second comparative a nitrogen generator which operates a warm compression cycle using one less heat exchanger;
FIGURE 3 is a schematic flow diagram of a third comparative embodiment of the warm compression cycle using molecular sieve for air purification;
FIGURE 4 is a schematic flow diagram of a first embodiment of the invention using cold compression of the waste nitrogen recycle flow wherein at least a portion of the work output from the expander is used to operate the cold recycle compressor; and
FIGURE 5 is a schematic flow diagram of a second embodiment of the invention using cold compression of the waste nitrogen recycle flow by means of the total available shaft work from the turboexpander, wherein refrigeration is supplied by an external source.

Referring to Figure 1 of the drawings, a nitrogen recovery system 2 provides for a stream of feed air 4 to be fed into a compressor 6. The resulting compressed air stream is forwarded to an aftercooler 7 for the purposes of cooling and condensing water vapour. Thereafter, the condensate is removed in a separator 8 and an air stream now indicated by the reference 10 exits the separator 8. The air stream 10 passes through heat exchanger 12 where the air stream is cooled by heat exchange with an oxygen-enriched gas stream 14 and nitrogen product stream 16. In the embodiment shown in Figure 1, heat exchanger 12 is a reversing heat exchanger in which air passages are periodically switched with waste nitrogen passages so that water and carbon dioxide deposited in solid form from the air are evaporated after a switch of the passages into the waste nitrogen stream. Appropriate valves and conduits are provided to enable the air and waste nitrogen passages to be so switched.

The cooled air stream leaving the heat exchanger 12, and now shown by the reference 18, enters an (optional) gas phase absorber 20 which absorbs impurities such as any residual carbon dioxide and hydrocarbons therefrom. The resulting filtered air stream now indicated by the reference 22 proceeds to an (optional) heat exchanger 24 where the air is further cooled against the countercurrent flow of oxygen enriched gas stream 26 from a turbo-expander 28.

The resulting cooled air stream now indicated by reference 30 exiting heat exchanger 24, is near saturation and may be partly in its liquid state. This stream enters a distillation column 32 at an intermediate (liquid-vapour contact or mass transfer) stage. The cooled air stream 30 is separated by (fractional) distillation into a substantially pure gaseous nitrogen overhead (fraction), a stream 34 of which exits at the top of the column 32, and a liquid oxygen-enriched fraction, a stream 36 of which passes out of the bottom of the column 32. The liquid stream 36 is cooled by passage through an (optional) heat exchanger 38 against (i.e. countercurrently to) an oxygen enriched gas stream 40 and nitrogen product gas stream 42. The resulting cooled oxygen-rich liquid stream now indicated by reference 44 passes through valve 45, its pressure thereby being reduced, and then via line 47 to condenser 46 where it boils while condensing a portion or sub-stream 48 of the gaseous nitrogen overhead stream 34 through indirect heat exchange. (The stream 34 of nitrogen is divided into two portions or sub-streams, one of which is the sub-stream 48 and the other of which is the stream 42 that is passed through the heat exchanger 38 countercurrently to the liquid oxygen stream 36, thereby being warmed. This other stream of nitrogen leaves the heat exchanger 38 (and is now indicated by the reference 54) and is then warmed to ambient temperature by passage through the heat exchanger 12 and thereafter is passed via line 17 out of the system 2 for use as product nitrogen.)

The condensed liquid nitrogen exits condenser 46 as a stream 50 of liquid. The stream 50 is then split, and a portion or sub-stream 51 is optionally collected in a conventional storage facility 52. The major portion, however, of the condensed liquid nitrogen stream 50 returns via line 53 to the distillation column 32 where it serves as reflux.

A first portion or sub-stream 55 of the oxygen-enriched gas stream 54 exiting heat exchanger 38 is heated by passage through heat exchanger 12, where it serves to cool the feed air stream 10. The gas stream 55 leaves the heat exchanger 12 at a position intermediate the ends of the heat exchanger 12 and flows through a (pipe) line 56. A second portion or sub-stream 58 of the oxygen-enriched gas stream 54 by-passes heat exchanger 12, and combines with the warmed gas flowing through line 56. The combined gas stream indicated by reference 60 enters a turboexpander 28 and expands to nearly atmospheric pressure producing refrigeration required to keep the system 2 cold. Some of the second portion or sub-stream 58 may by-pass the turboexpander 28 and be reunited with the rest of this sub-stream immediately downstream of the outlet of the turboexpander 28. The expanded gas stream exiting the turboexpander 28 (now indicated by the reference 26) is used to cool the incoming air, first by passage through heat exchanger 24. The oxygen-enriched gas stream, now indicated by reference 16, leaves the heat exchanger 24 and provides further cooling for the air by passage through the heat exchanger 12. The oxygen-enriched gas stream exiting heat exchanger 12 is shown as stream 15.

A third portion or sub-stream 62 of the oxygen-enriched gas stream is warmed by passage through a heat exchanger 64, preferably to ambient temperature. A portion or sub-stream 66 of the stream 62 is withdrawn from the heat exchanger 24 at a temperature intermediate those of the cool and warm ends thereof and is united with the gas stream 60 that enters the turboexpander 28. The remainder of the stream 62 continues its passage through the heat exchanger 64 and exits the warm end of the heat exchanger 64. The oxygen-enriched gas stream (now indicated by the reference 68) is compressed in compressor 70 to a pressure about equal to or slightly greater than the operating pressure of the distillation column 32. The resulting compressed gas stream, now indicated by reference 71, is cooled in an after cooler 72, further cooled to a low temperature by being returned through heat exchanger 64 from its warm to its cold end, and recycled via a line 74 to the bottom of the distillation column 32 where it serves as "boil up", thus increasing the nitrogen recovery possible from the feed air. The addition of the feed air stream 30 at an intermediate stage and recycled oxygen-enriched gas stream at the bottom of the column 32 permits the mass transfer stages between the inlets for these two streams to be used as a stripping section.

In the embodiment shown in FIGURE 2, a single heat exchanger performs the functions of the heat exchangers 12 and 64 of Figure 1. The single heat exchanger is indicated by the reference 112 in Figure 2. In all other respects, the embodiment shown in Figure 2 is the same as that shown in Figure 1, but before purposes of clarity the flow of the oxygen-enriched gas stream leaving the condenser above the distillation column is now described.

The oxygen-enriched stream 140 is warmed by passage through an optional heat exchanger 138. The warmed gas stream now indicated by reference 154 is divided into three portions or sub-streams. A first portion or sub-stream 155 of the oxygen enriched gas stream 154 is warmed in passage through the heat exchanger 112. The warmed gas stream leaves the heat exchanger at a position between the ends thereof through a line 156. A second portion or sub-stream of the oxygen-enriched gas stream 158 by-passes the heat exchanger 112 and combines with the first portion or sub-stream 155 in the line 160. The combined stream enters turboexpander 128 and is expanded to nearly atmospheric pressure to provide refrigeration, and exits the system via optional heat exchanger 124 and the main reversing heat exchanger 112.

A third portion or sub-stream 162 of the oxygen-enriched gas stream 154 passes completely through the heat exchanger 112 and, now indicated by reference 168, flows into the compressor 170. The resulting compressed gas stream, now indicated by reference 171, is then passed through an after cooler 172, back through heat exchanger 112, and then via line 174 to the bottom of distillation column 132.

In Figure 2, the stream of nitrogen product withdrawn from the heat exchanger 112 is indicated by the reference 117.

Referring to Figure 3 of the drawings, there is illustrated an embodiment of a nitrogen generator generally similar to that shown in Figure 2, but in which purification of the feed air occurs outside of any heat exchanger and therefore no heat exchanger of the reversing kind is employed. A compressed feed air stream is passed to a pre-purification unit 277 which typically contains beds of molecular sieves of zeolitic material which is able to be regenerated and which removes impurities such as carbon dioxide, some hydrocarbons and water vapour. A purified air stream 210 passes through the heat exchanger 212, through optional heat exchanger 224, and into the bottom of distillation column 232 via line 230.

In addition, the embodiment shown in Figure 3 differs from that shown in Figure 2 with respect to the treatment of the waste oxygen-enriched gas stream ("waste nitrogen") passing through the heat exchanger 212. A portion or sub-stream 276 of the waste nitrogen stream 215 is sent to the pre-purification unit 277 to serve as regeneration gas, which is normally heated before entering the pre-purification unit 277, and exits line 278. In operation, a first group of the beds of unit 277 is used to adsorb impurities from the incoming air, while the remaining beds are regenerated. Once the first group becomes appropriately laden with impurities, the flow of air is switched to the remaining beds, and the first group regenerated. Thus, continuous operation of the unit 277 is made possible.

The embodiments shown in Figures 1 to 3 are all directed to compression of a warm oxygen-enriched gas stream. That is, the waste nitrogen stream (which is enriched in oxygen) is warmed to essentially ambient temperature by passage through a heat exchanger before being compressed and recycled to the distillation column. These embodiments all improve nitrogen recovery over that possible without compression of a recycle waste nitrogen stream. Processes and apparatuses according to the invention employ "cold compression" of the waste nitrogen as a means of achieving improved recoveries in an efficient manner. Such embodiments use firstly excess refrigeration energy available in the turboexpanded stream of the waste gas and secondly the shaft work economy that can be achieved when compressing a gas in cold state. Typically, in plants in which the distillation column operating pressure is at least 100 psig, there is enough energy available in the turboexpansion of the waste nitrogen to cover the normal refrigeration needs of the plant and to compress a substantial amount of the waste gas recycle stream in order to increase nitrogen recovery. Such a scheme minimises the amount of equipment which needs to be installed, for example, a compressor wheel can be driven off the turboexpander shaft, and heat exchange passes for warming the waste gas recycle stream to ambient temperature prior to compression and then cooling the compressed stream to low temperature following compression are eliminated. Of course, any such process which uses expansion of waste nitrogen to drive a compressor will reduce the amount of waste nitrogen available for turboexpansion. At some point, nitrogen recovery by compression of recycling oxygen-enriched gas is maximised while sufficient such gas remains available to cover both the refrigeration needs of the plant and to supply the energy for the cold compressor. This "equilibrium point" depends upon the column operating pressure, the refrigeration needs of the plant, i.e. relating to its size and any liquid production requirements, the efficiencies of both the turboexpander and the cold compressor. There are other factors, eg, frictional pressure drops, and choice of temperatures of the fluids flowing into both the turboexpander and the cold compressor, which also have a bearing on the equilibrium point.

The shaft output of the turboexpander is used to accomplish two distinct tasks:
(1) driving a cold compressor of the waste nitrogen which is recycled to the distillation column, thereby improving the nitrogen recovery from the air feed to the distillation column, and
(2) removing energy (as heat) from the cold process equipment by delivering a portion of the shaft energy to a dissipative brake in the surroundings.

The embodiment illustrated in Figure 4 of the drawings shows the recycle of cold oxygen-enriched gas, i.e. oxygen-rich gas that is compressed in its cold state without being warmed to ambient temperature in a heat exchanger. More specifically, a compressed and purified feed air stream 310 is cooled by passage through a heat exchanger 312. A portion orsubsidiary stream 314 of the cooled air stream 310 is passed through an optional heat exchanger 316 in which it is further cooled and condensed before passing via line 318 into an intermediate stage of a distillation column 332. Asecond portion or subsidiary stream 320 of the cooled air stream 310 is passed directly to another, but lower, intermediate stage of the distillation column 332.

Air entering distillation column 332 is separated into a substantially pure gaseous nitrogen overhead exiting from the top of column 332 as stream 334 and an oxygen-enriched liquid bottom stream 336 exiting from the bottom of the column 332. The liquid stream 336 is cooled by passage through a heat exchanger 338 against a return oxygen-enriched gas stream 340 and a subsidiary or product stream 342 of nitrogen gas which is taken from the stream 334. The resulting cooled oxygen-enriched liquid stream, now indicated by reference 344, is reduced in pressure by passage through valve 345, and enters condenser 346 via line 347. The oxygen-enriched liquid stream boils in the condenser 346 while condensing a portion or sub-stream 348 of the gaseous nitrogen product stream 334 through indirect heat exchange. The condensed nitrogen is returned to the distillation column 332 to serve as reflux.

Resulting boiled oxygen-enriched gas is withdrawn as a stream 340 from the condenser 346 and is optionally warmed by passage through the heat exchanger 338. The stream of warmed oxygen-enriched gas leaving the heat exchanger 338, now indicated by the reference 301, is divided into three portions or sub-streams. One portion 302 of the oxygen-enriched gas stream 301 is not further warmed by heat exchange but enters a compressor 370 in which it is compressed. The resulting compressed gas stream, now indicated by reference 303, is then returned via line 304 to the bottom of distillation column 332 after being cooled by passage through heat exchanger 312 from a first intermediate region thereof at a relatively high temperature to a second intermediate region thereof at a relatively low temperature. A second portion or sub-stream 305 of the gas stream 301 is passed to the turboexpander 328 after passing through the heat exchanger 312 from its cold end to an intermediate region thereof. A third portion or substream may by-pass the heat exchanger 312 via valve 306. The expanded gas stream leaving the turboexpander 328 passes through the heat exchanger 316 from its cold end to its warm end thereby providing cooling for the air stream 314, and then through the heat exchanger 312 from its cold end to its warm end thereby providing cooling for the incoming air stream 310. The stream 342 after passage through the heat exchanger 338 also passes through the heat exchanger 338 also passes through the heat exchanger 312 from its cold end to its warm end thereby exchanging heat for the air stream 310. The resulting warmed nitrogen stream now indicated by reference 317 is taken as nitrogen product.

Of particular importance to this embodiment is that a shaft connection 307 is provided between the turboexpander 328 and the compressor 370. A portion of the work output of the turboexpander 328 is thus used to drive the compressor 370 thereby providing "boil up" flow distillation column 332 which enhances the recovery of the nitrogen product stream 317. Part of the work output is directed to a dissipative brake 308 to remover heat from the system and reject this heat to the surroundings. By the term "surroundings" is meant outside the boundaries of the cold box (not shown) in which the parts of the apparatus operating at cryogenic temperatures are located. The dissipative brake 308 may be a compressor, a pump, electrical generator, or like device, or even friction in the bearings of a rotating part. It is important that the system directs requisite energy to the surroundings to keep the cold compression process refrigerated.

Whereas the process shown in Figure 4 requires some of the turboexpander shaft output to supply a "dissipative" brake to refrigerate the plant, the process shown in Figure 5 of the drawings needs no dissipative brake because some of its refrigeration is provided from an outside source. The entire shaft output of the turbocompressor can be applied to driving a compressor; thus even higher recoveries of nitrogen from the air fed to the distillation column are achievable. In all other respects, the embodiment of the invention illustrated in Figure 5 is the same as that illustrated in Figure 4. In such use of cold compression, shown in Figure 5, all of the available work output of the turboexpander 428 is supplied to a compressor 470. This enables a higher recovery of nitrogen product 417 to be obtained because an even greater boil up flow is achievable in column 432. In this event, refrigeration needs to be supplied to the system, for example, by supplying liquid nitrogen to the distillation column 432 from an external source 471, and there is no intentional dissipative brake.

If the external source 471 of refrigeration for the process of Figure 5 is liquid nitrogen at or near the purity of the desired gaseous product of the plant, a proportional increase in gaseous nitrogen product the plant can result. The amount of refrigeration from an external source is a function of the heat leak and enthalpies associated with the fluid flows at the cold box boundaries.

The cold waste nitrogen compression is achieved by coupling the compressor 470 to the turboexpander 428 output exclusively, which is made possible by providing an external source of refrigeration. Such a scheme gains commercial attractiveness as the cost of supplying refrigerating substances 471 (e.g. liquid nitrogen) has diminished as producing plants for these liquids has become larger and more efficient.

The increase in nitrogen recovery made possible by dedicating the total output of the turboexpander 428 to recycle waste nitrogen compression further increases the amount of nitrogen gas per unit of liquid refrigerant 471 supplied, and therefore the economic return of the plant.

Another advantage of the process shown in Figure 5 is that only two cold machines are required, preferably connected by a common shaft. The additional mechanical complication of the dissipative device of FIGURE 4 is eliminated.

In the plants shown in Figures 4 and 5, pre-purification of feed air is a preferred alternative to a reversing heat exchanger.

In another example of the use of cold compression (not shown), the energy for such compression comes from an external source, e.g., an electric motor. The electric motor is an external requirement and increases the refrigeration needs of the plant. However, these are also met by the turboexpander which is free of the necessity of supplying shaft energy to the cold compressor. Once again, however, as cold compression increases the recovery of nitrogen, the amount of waste nitrogen available for turboexpansion is reduced. When this is reduced to the quantity required to meet the refrigeration needs of the plant (including that from the external energy source driving the cold compressor), then the maximum recovery of nitrogen has been reached.

### EXAMPLE 1 (COMPARATIVE)

A process for the recovery of substantially pure nitrogen at the rate of 3113 standard cubic metres per hour (SCMH) (110,000 standard cubic feet per hour (SCFH)) at 790.7 kPa (114.7 psia) is conducted in accordance with FIGURE 1. SCMH and SCFH refer to a substance measured as a gas at at 101.3 kPa and 21°C (14.7 psia and 70°F).

A feed air flow of 5240.3 SCMH (185,169 SCFH) was compressed to a pressure of 863.8 kPa (125.3 psia), aftercooled to a temperature of 38°C (100°F), and then cooled in the heat exchanger 12. The cooled air stream was passed via the line 18 at the rate of 5188.4 SCMH (183,336 SCFH) and a temperature of -165.4°C (-265.8°F) to the gas phase absorber 20 for the removal of impurities. The air stream was then cooled by passage through the heat exchanger 24. The cooled air having a liquid content of 0.03 mole percent at -167.6°C and 842.4 kPa (-269.6°F and 122.2 psia) was sent to an elevated tray (i.e. intermediate stage) of the distillation column 32.

Gaseous nitrogen at a pressure of 821.1 kPa (119.1 psia) and a temperature of -172.4°C (-278.4°F) exited from the top of the distillation column 32 and a portion was forwarded to the heat exchanger 38 where the nitrogen was warmed to -166.9°C (-268.5°F). A flow of 3112 SCMH (109,980 SCFH) was warmed in heat exchanger 12. The final product was cooled at a temperature of 34.8°C (94.6°F) and 813 kPa (118 psia) to give a nitrogen recovery of about 59 mole percent based on total air compressed.

The oxygen enriched gas from condenser 46 passed through the heat exchanger 38 at the rate of 4020 SCMH (142,036 SCFH). A portion of this flow, 1944 SCMH (68,700 SCFH), passed completely through the heat exchanger 64 and was warmed to ambient temperature therein. The warmed gas was then compressed to 850 kPa (123.3 psia) and aftercooled to 37.8°C (100°F). The cooled gas re-entered the heat exchanger 64 and was cooled to -160.7°C (-257.3°F) at a pressure of 844.5 kPa (122.5 psia) for delivery to the bottom of the distillation column 32.

The balance of the oxygen enriched gas leaving the heat exchanger 38 was divided between the heat exchangers 64 and 12 and by-pass line 58 to provide the feed gas to the turboexpander 28 and its by-pass, a total of 2075 SCMH (73,336 SCFH), at a pressure of 354.4 kPa (51.4 psia) and temperature of -148.3°C (-235°F). A flow of 1720 SCMH (60,790 SCFH) of this gas 60 passed through the turboexpander 28 providing requisite refrigeration. The turboexpander exhaust gas and the by-pass was combined into line 26 and warmed in the heat exchangers 24 and 12.

### EXAMPLE 2

Aflow of 707.5 SCMH (25,000 SCFH) of nitrogen was produced in accordance with the process described in FIGURE 4 wherein a portion of the work output from the turboexpander 328 was sent to the compressor 370 via the shaft 307 and the balance was transmitted out of the system.

An airflow of 1459 SCMH (51,546 SCFH) was fed at a pressure of 917 kPa (133 psia) through the heat exchanger 312. Then 29.3 SCMH (1036 SCFH) of the cooled air was sent through the heat exchanger 316 for condensing prior to delivery to an intermediate stage of the distillation column 332. The balance of the cooled air entered an elevated tray, below the entry stage of line 318, of the distillation column 332 directly. The products of the distillation column 332 were 1861 SCMH (65,758 SCFH) nitrogen gas, of which 1153 SCMH (40,758 SCFH) was returned as reflux after condensing in condenser 346, and 1025 SCMH (36,211 SCFH) of oxygen rich liquid stream 336. The oxygen rich liquid stream 336 was subcooled in the heat exchanger 338 and throttled through valve to about 469 kPa (68 psia) for boiling in the condenser 346. Both the boiled oxygen rich gas stream 340 and 707.5 SCMH (25,000 SCFH) of the nitrogen (product) stream 342 were warmed in heat exchanger 338. The warmed nitrogen product stream entered the main heat exchanger 312, was warmed to ambient temperature, and exited the system as stream 317.

The oxygen-enriched gas stream was divided into a portion or sub-stream for turboexpansion and a portion or sub-stream for cold compression and recycle to the distillation column, the relative flow rates being 751 and 274 SCMH respectively (26,546 SCFH and 9665 SCFH, respectively). The recycle gas was compressed to 896 kPa (130 psia), cooled in heat exchanger 312 and injected into the bottom of the distillation column 332 for "boil up". The gas stream passed to the turboexpander 328 was first heated partially in heat exchanger 312 and expanded to about 124 kPa (18 psia) in the turboexpander 328. It then passed through heat exchangers 316 and 312, yielding its refrigeration and becoming the waste nitrogen product of the plant.

By these means, a nitrogen recovery of about 48.5 mole percent of the feed air was attained. Various recoveries are achievable by this process, depending on the plant size, cold compressor and turboexpander efficiencies, the operating pressure of the distillation column, the number of trays in the distillation column, and the desired nitrogen purity.

In this Example, part of the shaft work generated by the turboexpander 328 is transmitted to the surroundings and part to the cold compressor 303. Work transmitted to the surroundings by brake 308 constitutes the refrigeration necessary to refrigerate the plant.

### EXAMPLE 3

The same procedure was follows as in Example 2 except that all of the available work output from the turboexpander 428 was used to operate the compressor 470 in order to maximise recovery of nitrogen as illustrated in Figure 5. The cold box being well insulated, 27 SCMH (949 SCFH) of liquid nitrogen was added to the top of the distillation column 432 to provide refrigeration. A feed air stream of 1459 SCMH (51,546 SCFH) was processed in the system to produce up to 849 SCMH (30,000 SCFH) of product nitrogen 417 resulting in a nitrogen recovery rate of about 58 mole percent of the feed air.

The present invention recovers substantially pure nitrogen product, both gas and liquid as desired, on the order of up to 70 mole percent. As plant size decreases, especially below 22640 SCMH (800,000 SCFH), the present invention becomes more cost effective due to the absence of the standard column reboiler and the less expensive heat pump circuit comprising compression equipment.

A single turboexpander is not essential to this embodiment of the invention. If fact, one turboexpander serving the refrigeration needs of the plant and another driving the compressor for recycle to the column in order to provide higher nitrogen recovery is within the scope of the present invention. There are other combinations, in all of which the cold compression step uses shaft energy inherently produced in the process.

## Claims (Claims for the following Contracting State(s): GB, SE, LI, CH, BE, AT, LU)

1. A process for the recovery of substantially pure nitrogen product at superatmospheric pressure from air comprising the steps of:
a) compressing gaseous feed air;
b) cooling the compressed air in a heat exchanger by heat exchange with enriched oxygen and nitrogen product streams;
c) introducing the cooled and compressed air to an intermediate stage of a single distillation column;
d) separating the air in the column into a substantially pure gaseous nitrogen overhead fraction and an oxygen enriched liquid bottoms fraction and withdrawing a stream of each fraction from the column;
e) forwarding substantially all of the oxygen enriched liquid bottoms stream and a portion of the gaseous nitrogen overhead stream to a condenser and therein indirectly exchanging heat between the bottoms stream and overhead stream thereby boiling oxygen enriched liquid to form an oxygen-enriched gas stream and condensing gaseous nitrogen to form a liquid nitrogen stream;
f) recycling at least a major portion of the resulting liquid nitrogen stream to the top of the distillation column as reflux;
g) compressing a first portion of the oxygen-enriched gas and recycling the compressed first portion of the oxygen enriched gas stream to the bottom of the distillation column without changing the composition of the oxygen-enriched gas outside the distillation column either upstream or downstream of the compression of said first portion, thereby enhancing nitrogen product recovery from the air;
h) warming the remainder of the gaseous nitrogen overhead stream in the heat exchanger by said heat exchange with the compressed air;
i) recovering the warmed nitrogen overhead stream as a substantially pure nitrogen product from the heat exchanger, and
(j) turboexpanding a second portion of the said oxygen enriched gas stream in an expanding means thereby generating work output, wherein: the first portion of the oxygen enriched gas stream of step (g) starts its compression at about a temperature of the distillation column, and at least a portion of the work output obtained from the expanding means is utilised to compress the first portion of the oxygen-enriched gas stream which is recycled to the bottom of the distillation column.

2. A process according to Claim 1, further comprising warming a third portion of the oxygen enriched gas stream in the heat exchanger by heat exchange with the compressed air upstream of combination with said second portion and turboexpansion of the combination.

3. A process according to Claim 2, wherein only part of the second portion is turboexpanded while the remainder of the second portion bypasses the expanding means.

4. A process according to any one of the preceding Claims, further comprising removing from the process a portion of the work output from the expansion means.

5. A process according to Claim 4, wherein the removed portion of the work output is transferred to the surroundings as heat or work.

6. A process according to any one of Claims 1 to 3, wherein all the work output is utilised to compress the first portion of the oxygen-enriched gas stream which is recycled to the bottom of the distillation column, and further comprising adding refrigeration to the process from an external source.

7. A process according to Claim 6, wherein the step of adding refrigeration to the process comprises adding liquid nitrogen to the distillation column.

8. Apparatus for the production of nitrogen product from air comprising:
a) a first compressor for increasing the pressure of gaseous feed air;
b) a heat exchanger for cooling the high pressure air with nitrogen and oxygen-enriched products of distilled feed air;
c) a distillation column for separating the cooled air into a substantially pure gaseous nitrogen overhead fraction and an oxygen enriched liquid bottom fraction and having an outlet for the nitrogen communicating with the heat exchanger;
d) a condenser for at least partially condensing a stream of the gaseous nitrogen overhead to form a liquid nitrogen stream by indirect heat exchange with a stream of the oxygen enriched liquid bottoms fraction to form an oxygen enriched gas stream;
e) a first recycle means for returning a major portion of the liquid nitrogen stream from the condenser to the distillation column as reflux;
f) a second compressor for increasing the pressure of a first part of the oxygen enriched gas stream; and
g) a second recycle means for returning the increased pressure oxygen enriched gas stream to the bottom of the distillation column thereby enabling nitrogen product recovery to be enhanced, there being no means intermediate the distillation column and the inlet of the second compressor or intermediate the outlet of the second compressor and the distillation column for changing the composition of the oxygen-enriched gas;
wherein the nitrogen product is able to be recovered from the said heat exchanger; the apparatus further comprises a turboexpander for expanding a second part of the oxygen-enriched-gas stream; the second compressor is coupled to the turboexpander so as, in use, to utilise at least a portion of the work output obtained from the turboexpander to compress the first part of the oxygen-enriched gas stream which is recycled to the bottom of the distillation column; and the second compressor is in a location in the apparatus such that in operation it receives oxygen-enriched gas at a cryogenic temperature.

9. Apparatus according to Claim 8, in which the second compressor is coupled to the turboexpander through a dissipative brake.

10. Apparatus according to Claim 8 or Claim 9, in which the second compressor is upstream of the cold end of the heat exchanger and down stream of the outlet of the condenser for the oxygen-rich gas stream.

## Claims (Claims for the following Contracting State(s): DE, FR, IT, NL)

1. A process for the recovery of substantially pure nitrogen product at superatmospheric pressure from air comprising the steps of:
a) compressing gaseous feed air;
b) cooling the compressed air in a heat exchanger by heat exchange with enriched oxygen and nitrogen product streams;
c) introducing the cooled and compressed air to an intermediate stage of a single distillation column;
d) separating the air in the column into a substantially pure gaseous nitrogen overhead fraction and an oxygen enriched liquid bottoms fraction and withdrawing a stream of each fraction from the column;
e) forwarding substantially all of the oxygen enriched liquid bottoms stream and a portion of the gaseous nitrogen overhead stream to a condenser and therein indirectly exchanging heat between the bottoms stream and overhead stream thereby boiling oxygen enriched liquid to form an oxygen-enriched gas stream and condensing gaseous nitrogen to form a liquid nitrogen stream;
f) recycling at least a major portion of the resulting liquid nitrogen stream to the top of the distillation column as reflux;
g) introducing a first portion of the oxygen enriched gas stream at a cryogenic temperature into a compressor, compressing said first portion of the oxygen-enriched gas stream, and recycling the compressed first portion of the oxygen-enriched gas stream to the bottom of the distillation column thereby enhancing nitrogen product recovery from the air;
h) warming the remainder of the gaseous nitrogen overhead stream in the heat exchanger by said heat exchange with the compressed air;
i) recovering the warmed nitrogen overhead stream as a substantially pure nitrogen product from the heat exchanger;
j) turboexpanding a second portion of the said oxygen enriched gas stream in an expanding means thereby generating work output; and
k) utilising a portion of the work output obtained from the expanding means to compress the first portion of the oxygen-enriched gas stream which is recycled to the bottom of the distillation column.

2. A process according to Claim 1, further comprising warming a third portion of the oxygen enriched gas stream in the heat exchanger by heat exchange with the compressed air upstream of combination with said second portion and expansion of the combination.

3. A process according to Claim 1 or Claim 2, wherein only part of the second portion is turboexpanded while the remainder of the second portion bypasses the expanding means.

4. A process according to any one of the preceding Claims, wherein the first portion of the oxygen enriched gas stream of step (g) starts its compression at about a temperature of the distillation column.

5. A process according to any one of the preceding claims, further comprising removing from the process a portion of the work output from the expansion means

6. A process according to Claim 5, wherein the removed portion of the work output is transferred to the surroundings as heat or work.

7. A process according to any one of claims 1 to 4, wherein all the work output is utilised to compress the first portion of the oxygen-enriched gas stream which is recycled to the bottom of the distillation column, and further comprising adding refrigeration to the process from an external source.

8. A process according to Claim 7, wherein the step of adding refrigeration to the process comprises adding liquid nitrogen to the distillation column.

9. Apparatus for the production of nitrogen product from air comprising:
a) a first compressor for increasing the pressure of gaseous feed air;
b) a heat exchanger for cooling the high pressure air with nitrogen and oxygen-enriched products of distilled feed air;
c) a distillation column for separating the cooled air into a substantially pure gaseous nitrogen overhead fraction and an oxygen enriched liquid bottom fraction and having an outlet for the nitrogen communicating with the heat exchanger;
d) a condenser for at least partially condensing a stream of the gaseous nitrogen overhead to form a liquid nitrogen stream by indirect heat exchange with a stream of the oxygen-enriched liquid bottoms fraction to form an oxygen-enriched gas stream;
e) a first recycle means for returning a major portion of the liquid nitrogen stream from the condenser to the distillation column as reflux;
f) a second compressor for increasing the pressure of a first part of the oxygen enriched gas stream, the second compressor being positioned such that in use it receives oxygen-enriched gas at a cryogenic temperature; and
(g) a second recycle means for returning increased pressure oxygen enriched gas stream to the bottom of the distillation column thereby enhancing nitrogen product recovery; wherein in use the nitrogen product is recovered from the said heat exchanger, and the apparatus further comprises a turboexpander for expanding a second part of the oxygen-enriched gas stream, the second compressor being coupled to the turboexpander so as, in use, to utilise at least a portion of the work output obtained from the turboexpander to compress the first part of the oxygen enriched gas stream which is recycled to the bottom of the distillation column.

10. Apparatus according to Claim 9, in which the second compressor is coupled to the turboexpander through a dissipative brake.

11. Apparatus according to Claim 9 or Claim 10, in which the second compressor is upstream of the cold end of the heat exchanger and downstream of the outlet of the condenser for the oxygen-rich gas stream.

## Patentansprüche (Patentansprüche für folgende(n) Vertragsstaat(en): GB, SE, LI, CH, BE, AT, LU)

1. Verfahren zur Rückgewinnung eines im wesentlichen reinen Stickstoffproduktes bei überatmosphärischem Druck von Luft, mit den Schritten:
a) Verdichten von gasförmiger Zufuhrluft;
b) Kühlen der verdichteten Luft in einem Wärmetauscher durch Wärmeaustausch mit angereicherten Sauerstoff- und Stickstoffproduktströmen;
c) Einführen der gekühlten und verdichteten Luft in eine Zwischenstufe einer einzelnen Destillationssäule;
d) Trennen der Luft in der Säule in eine im wesentliche reine gasförmige Stickstoffüberkopffraktion und eine sauerstoffangereieherte flüssige Bodenfraktion und Abziehen eines Stromes jeder Fraktion von der Säule;
e) Befördern im wesentlichen aller sauerstoffangereicherter flüssiger Bodenströme und eines Anteils des gasförmigen Stickstoffüberkopfstromes zu einem Kondensator, wobei darin zwischen dem Bodenstrom und dem Überkopfstrom ein indirekter Wärmeaustausch erfolgt, wodurch sauerstoffangereicherte Flüssigkeit aufgekocht wird, um einen sauerstoffangereicherten Gasstrom zu bilden, und gasförmiger Stickstoff kondensiert wird, um einen flüssigen Stickstoffstrom zu bilden;
f) Rückführen zumindest eines Hauptanteiles des resultierenden Füssigstickstoffstromes an den Kopf der Destillationssäule als Rückfluß;
g) Verdichten eines ersten Anteiles des sauerstoffangereicherten Gases und Rückführen des verdichteten ersten Anteiles des sauerstoffangereicherten Gasstromes an den Boden der Destillationssäule ohne Änderung der Zusammensetzung des sauerstoffangereicherten Gases außerhalb der Destillationssäule entweder oberstromig oder unterstromig der Verdichtung des ersten Anteiles, wodurch eine Stickstoffproduktrückgewinnung aus der Luft gesteigert wird;
h) Erwärmen des Restes des gasförmigen Stickstoffüberkopfstromes in dem Wärmetauscher durch den Wärmeaustausch mit der verdichteten Luft;
i) Rückgewinnung des erwärmten Stickstoffüberkopfstromes als ein im wesentliches reines Stickstoffprodukt von dem Wärmetauscher, und
(j) Turboexpandieren eines zweiten Anteiles des sauerstoffangereicherten Gasstromes in einem Expansionsmittel, wodurch ein Energieausgang erzeugt wird, wobei: der erste Anteil des sauerstoffangereicherten Gasstromes von Schritt (g) seine Verdichtung bei etwa einer Temperatur der Destillationssäule beginnt, und zumindest ein Anteil des Energieausganges, der von dem Expansionsmittel erhalten wird, dazu verwendet wird, den ersten Anteil des sauerstoffangereicherten Gasstromes zu Verdichten, der zu dem Boden der Destillationssäule rückgeführt wird.

2. Verfahren nach Anspruch 1, ferner mit einem Aufwärmen eines dritten Anteiles des sauerstoffangereicherten Gasstromes in dem Wärmetauscher durch Wärmeaustausch mit der verdichteten Luft oberstromig der Kombination mit dem zweiten Anteil und Turboexpansion der Kombination.

3. Verfahren nach Anspruch 2, wobei nur ein Teil des zweiten Anteiles turboexpandiert wird, während der Rest des zweiten Anteiles das Expansionsmittel umgeht.

4. Verfahren nach einem der vorhergehenden Ansprüche, ferner mit einem Entfernen eines Anteiles des Energieausganges von dem Expansionsmittel aus dem Prozeß.

5. Verfahren nach Anspruch 4, wobei der entfernte Anteil des Energieausganges an die Umgebung als Wärme oder Arbeit übertragen wird.

6. Verfahren nach einem der Ansprüche 1 bis 3, wobei der gesamte Energieausgang dazu verwendet wird, den ersten Anteil des sauerstoffangereicherten Gasstromes zu Verdichten, der an den Boden der Destillationssäule rückgeführt wird, und ferner dem Verfahren von einer externen Quelle eine Kühlung hinzugefügt wird.

7. Verfahren nach Anspruch 6, wobei der Schritt, um dem Verfahren eine Kühlung hinzuzufügen, umfaßt, daß flüssiger Stickstoff an die Destillationssäule hinzugefügt wird.

8. Vorrichtung zur Herstellung eines Stickstoffproduktes aus Luft, mit:
a) einem ersten Verdichter zur Erhöhung des Druckes von gasförmiger Zufuhrluft;
b) einem Wärmetauscher zum Kühlen der Hochdruckluft mit stickstoff- und sauerstoffangereicherten Produkten der destillierten Zufuhrluft;
c) einer Destillationssäule zum Trennen der gekühlten Luft in eine im wesentlichen reine gasförmige Stickstoffüberkopffraktion und eine sauerstoffangereicherte flüssige Bodenfraktion und mit einem Auslaß für den Stickstoff, der mit dem Wärmetauscher in Verbindung steht;
d) einem Kondensator zum zumindest teilweisen Kondensieren eines Stromes des gasförmigen Stickstoffüberkopfes, um durch indirekten Wärmeaustausch mit einem Strom der sauerstoffangereicherten flüssigen Bodenfraktion einen flüssigen Stickstoffstrom zu bilden, um einen sauerstoffangereicherten Gasstrom zu bilden;
e) einem ersten Rückführmittel zum Rückführen eines Hauptanteiles des flüssigen Stickstoffstromes von dem Kondensator zu der Destillationssäule als rückfluß;
f) einem zweiten Verdichter zur Erhöhung des Druckes eines ersten Teiles des sauerstoffangereicherten Gasstromes; und
g) einem zweiten Rückführmittel zum Rückführen des sauerstoffangereicherten Gasstromes mit erhöhtem Druck an den Boden der Destillationssäule, wodurch eine Stickstoffproduktrückgewinnung gesteigert werden kann, wobei keine Mittel zwischen der Destillationssäule und dem Einlaß des zweiten Verdichters oder zwischen dem Auslaß des zweiten Verdichters und der Destillationssäule zur Änderung der Zusammensetzung des sauerstoffangereicherten Gases vorhanden sind;
wobei das Stickstoffprodukt von dem Wärmetauscher rückgewonnen werden kann, die Vorrichtung ferner eine Turboexpansionseinrichtung zum Expandieren eines zweite Teiles des sauerstoffangereicherten Gasstromes umfaßt, der zweite Verdichter mit der Turboexpansionseinrichtung so gekoppelt ist, um im Gebrauch zumindest einen Anteil des von der Turboexpansíonseinrichtung erhaltenen Energieausganges zum Verdichten des ersten Teiles des sauerstoffangereicherten Gasstromes zu verwenden, der zu dem Boden der Destillationssäule rückgeführt wird; und der zweite Verdichter an einem Ort in der Vorrichtung vorgesehen ist, so daß dieser im Betrieb sauerstoffangereichertes Gas bei einer kryogenischen Temperatur aufnimmt.

9. Vorrichtung nach Anspruch 8, wobei der zweite Verdichter mit der Turboexpansionseinrichtung über eine dissipative Bremse gekoppelt ist.

10. Vorrichtung nach Anspruch 8 oder Anspruch 9, wobei der zweite Verdichter oberstromig des kalten Endes des Wärmetauschers und unterstromig des Auslasses des Kondensators für den sauerstoffreichen Gasstrom angeordnet ist.

## Patentansprüche (Patentansprüche für folgende(n) Vertragsstaat(en): DE, FR, IT, NL)

1. Verfahren zur Rückgewinnung eines im wesentlichen reinen Stickstoffproduktes bei überatmosphärischem Druck von Luft, mit den Schritten:
a) Verdichten von gasförmiger Zufuhrluft;
b) Kühlen der verdichteten Luft in einem Wärmetauscher durch Wärmeaustausch mit angereicherten Sauerstoff- und Stickstoffproduktströmen;
c) Einführen der gekühlten und verdichteten Luft in eine Zwischenstufe einer einzelnen Destillationssäule;
d) Trennen der Luft in der Säule in eine im wesentliche reine gasförmige Stickstoffüberkopffraktion und eine sauerstoffangereicherte flüssige Bodenfraktion und Abziehen eines Stromes jeder Fraktion von der Säule;
e) Befördern im wesentlichen aller sauerstoffangereicherter flüssiger Bodenströme und eines Anteils des gasförmigen Stickstoffüberkopfstromes zu einem Kondensator, wobei darin zwischen dem Bodenstrom und dem Überkopfstrom ein indirekter Wärmeaustausch erfolgt, wodurch sauerstoffangereicherte Flüssigkeit aufgekocht wird, um einen sauerstoffangereicherten Gasstrom zu bilden, und gasförmiger Stickstoff kondensiert wird, um einen flüssigen Stickstoffstrom zu bilden;
f) Rückführen zumindest eines Hauptanteiles des resultierenden Füssigstickstoffstromes an den Kopf der Destillationssäule als Rückfluß;
g) Einführen eines ersten Anteiles des sauerstoffangereicherten Gasstromes bei einer kryogenischen Temperatur in einen Verdichter, Verdichten des ersten Anteiles des sauerstoffangereicherten Gasstromes und Rückführen des verdichteten ersten Anteiles des sauerstoffangereicherten Gasstromes zu dem Boden der Destillationssäule, wodurch die Stickstoffproduktrückgewinnung von der Luft gesteigert wird;
h) Erwärmen des Restes des gasförmigen Stickstoffüberkopfstromes in dem Wärmetauscher durch den Wärmeaustausch mit der verdichteten Luft;
i) Rückgewinnung des erwärmten Stickstoffüberkopfstromes als ein im wesentliches reines Stickstoffprodukt von dem Wärmetauscher, und
j) Turboexpandieren eines zweiten Anteiles des sauerstoffangereicherten Gasstromes in einem Expansionsmittel, wodurch ein Energieausgang erzeugt wird; und
k) Verwenden eines Anteiles des Energieausganges, der von der Expansionseinrichtung erhalten wird, um den ersten Anteil des sauerstoffangereicherten Gasstromes zu Verdichten, der an den Boden der Destillationssäule rückgeführt wird.

2. Verfahren nach Anspruch 1, ferner mit einem Aufwärmen eines dritten Anteiles des sauerstoffangereicherten Gasstromes in dem Wärmetauscher durch Wärmeaustausch mit der verdichteten Luft oberstromig der Kombination mit dem zweiten Anteil und Expansion der Kombination.

3. Verfahren nach einem der Ansprüche 1 oder 2, wobei nur ein Teil des zweiten Anteiles turboexpandiert wird, während der Rest des zweiten Anteiles das Expansionsmittel umgeht.

4. Verfahren nach einem der vorhergehenden Ansprüche, wobei der erste Anteil des sauerstoffangereicherten Gasstromes von Schritt (g) seine Verdichtung bei etwa einer Temperatur der Destillationssäule beginnt.

5. Verfahren nach einem der vorhergehenden Ansprüche, ferner mit einem Entfernen eines Anteiles des Energieausganges von dem Expansionsmittel aus dem Prozeß.

6. Verfahren nach Anspruch 5, wobei der entfernte Anteil des Energieausganges an die Umgebung als Wärme oder Arbeit übertragen wird.

7. Verfahren nach einem der Ansprüche 1 bis 4, wobei der gesamte Energieausgang dazu verwendet wird, den ersten Anteil des sauerstoffangereicherten Gasstromes zu Verdichten, der an den Boden der Destillationssäule rückgeführt wird, und ferner dem Verfahren von einer externen Quelle eine Kühlung hinzugefügt wird.

8. Verfahren nach Anspruch 7, wobei der Schritt, um dem Verfahren eine Kühlung hinzuzufügen, umfaßt, daß flüssiger Stickstoff an die Destillationssäule hinzugefügt wird.

9. Vorrichtung zur Herstellung eines Stickstoffproduktes aus Luft, mit:
a) einem ersten Verdichter zur Erhöhung des Druckes von gasförmiger Zufuhrluft;
b) einem Wärmetauscher zum Kühlen der Hochdruckluft mit stickstoff- und sauerstoffangereicherten Produkten der destillierten Zufuhrluft;
c) einer Destillationssäule zum Trennen der gekühlten Luft in eine im wesentlichen reine gasförmige Stickstoffüberkopffraktion und eine sauerstoffangereicherte flüssige Bodenfraktion und mit einem Auslaß für den Stickstoff, der mit dem Wärmetauscher in Verbindung steht;
d) einem Kondensator zum zumindest teilweisen Kondensieren eines Stromes des gasförmigen Stickstoffüberkopfes, um durch indirekten Wärmeaustausch mit einem Strom der sauerstoffangereicherten flüssigen Bodenfraktion einen flüssigen Stickstoffstrom zu bilden, um einen sauerstoffangereicherten Gasstrom zu bilden;
e) einem ersten Rückführmittel zum Rückführen eines Hauptanteiles des flüssigen Stickstoffstromes von dem Kondensator zu der Destillationssäule als Rückfluß;
f) einem zweiten Verdichter zur Erhöhung des Druckes eines ersten Teiles des sauerstoffangereicherten Gasstromes, wobei der zweite Verdichter so positioniert ist, daß er im Gebrauch sauerstoffangereichertes Gas bei einer kryogenischen Temperatur aufnimmt; und
g) einem zweiten Rückführmittel zur Rückführung eines sauerstoffangereicherten Gasstromes mit erhöhtem Druck an den Boden der Destillationssäule, wodurch eine Stickstoffproduktrückgewinnung gesteigert wird; wobei im Gebrauch das Stickstoffprodukt von dem Wärmetauscher rückgewonnen wird, und die Vorrichtung ferner eine Turboexpansionseinrichtung zur Expandierung eines zweiten Anteiles des sauerstoffangereicherten Gasstromes umfaßt, wobei der zweite Verdichter mit der Turboexpansionseinrichtung so gekoppelt ist, um im Gebrauch zumindest einen Anteil des Energieausganges, der von der Turboexpansionseinrichtung erhalten wird, zur Verdichtung des ersten Teiles des sauerstoffangereicherten Gasstromes zu verwenden, der an den Boden der Destillationssäule rückgeführt wird.

10. Vorrichtung nach Anspruch 9, wobei der zweite Verdichter mit der Turboexpansionseinrichtung über eine dissipative Bremse gekoppelt ist.

11. Vorrichtung nach Anspruch 9 oder Anspruch 10, wobei der zweite Verdichter oberstromig des kalten Endes des Wärmetauschers und unterstromig des Auslasses des Kondensators für den sauerstoffreichen Gasstrom angeordnet ist.

## Revendications (Revendications pour l'(les) Etat(s) contractant(s) suivant(s): GB, SE, LI, CH, BE, AT, LU)

1. Procédé pour la récupération d'azote essentiellement pur produit sous une pression supérieure à la pression atmosphérique, à partir d'air, le procédé comprenant les étapes consistant à :
a) comprimer de l'air gazeux d'alimentation ;
b) refroidir l'air comprimé, dans un échangeur de chaleur, par échange de chaleur avec des courants enrichi en oxygène et d'azote produit ;
c) introduire l'air, refroidi et comprimé, dans un étage intermédiaire d'une colonne unique de distillation ;
d) séparer dans la colonne l'air en une fraction de tête formée d'azote gazeux essentiellement pur et une fraction de queue formée d'un liquide enrichi en oxygène, et soutirer de la colonne un courant de chaque fraction ;
e) envoyer la quasi-totalité du courant de queue, qui est un liquide enrichi en oxygène, et une partie du courant de tête, comportant de l'azote gazeux, vers un condenseur et les y soumettre à un échange indirect de chaleur entre le courant de queue et le courant de tête, ce qui provoque l'ébullition du liquide enrichi en oxygène pour former un courant de gaz enrichi en oxygène et la condensation de l'azote gazeux pour former un courant d'azote liquide ;
f) recycler au moins une majeure partie du courant d'azote liquide résultant que l'on envoie, à titre de reflux, vers le sommet de la colonne de distillation ;
g) comprimer une première partie du gaz enrichi en oxygène, et recycler la première partie, comprimée, du courant gazeux enrichi en oxygène en l'envoyant vers le bas de la colonne de distillation, sans modifier la composition du gaz enrichi en oxygène à l'extérieur de la colonne de distillation, en amont ou en aval de la compression de ladite première partie, ce qui augmente le taux de récupération de l'azote produit à partir de l'air ;
h) réchauffer le reste du courant de tête, comprenant de l'azote gazeux, dans l'échangeur de chaleur, par ledit échange de chaleur avec l'air comprimé ;
i) récupérer, à partir de l'échangeur de chaleur, le courant de tête chauffé, formé d'azote, à titre d'azote essentiellement pur obtenu comme produit ; et
j) effectuer une turbodétente d'une seconde partie dudit courant gazeux enrichi en oxygène dans un moyen de détente, ce qui engendre à la sortie de ce moyen du travail, dans lequel : la première partie du courant gazeux enrichi en oxygène de l'étape (g) commence sa compression à une température voisine de celle de la colonne de distillation, et au moins une partie du travail disponible à la sortie et obtenu à partir du moyen de détente est utilisée pour comprimer la première partie du courant gazeux enrichi en oxygène, qui est recyclée vers le bas de la colonne de distillation.

2. Procédé selon la revendication 1, comprenant en outre le réchauffage d'une troisième partie du courant gazeux enrichi en oxygène, dans l'échangeur de chaleur, par échange de chaleur avec l'air comprimé en amont de la combinaison avec ladite seconde partie et turbodétente de la combinaison.

3. Procédé selon la revendication 2, dans lequel une partie seulement de la seconde partie subit une turbodétente cependant que le reste de la seconde partie contourne le moyen de détente.

4. Procédé selon l'une quelconque des revendications précédentes, comprenant en outre l'enlèvement, du procédé, d'une partie du travail disponible à la sortie du moyen assurant une détente.

5. Procédé selon la revendication 4, dans lequel la partie de travail disponible à la sortie (du moyen de détente) que l'on enlève est transférée à l'environnement, sous forme de chaleur ou de travail.

6. Procédé selon l'une quelconque des revendications 1 à 3, dans lequel la totalité du travail disponible à la sortie sert à comprimer la première partie du courant gazeux enrichi en oxygène, qui est recyclée vers le bas de la colonne de distillation, le procédé comprenant en outre l'addition d'une réfrigération, provenant d'une source externe, que l'on introduit dans le procédé.

7. Procédé selon la revendication 6, dans lequel l'étape d'addition d'une réfrigération introduite dans le procédé comprend l'addition d'azote liquide à la colonne de distillation.

8. Appareil pour la production d'azote obtenu comme produit à partir de l'air, cet appareil comprenant :
a) un premier compresseur, destiné à augmenter la pression de l'air gazeux d'alimentation ;
b) un échangeur de chaleur, destiné à soumettre l'air, sous pression élevée, à du refroidissement réalisé à l'aide des produits, de l'azote et un produit enrichi en oxygène, obtenu à partir de l'air d'alimentation distillé ;
c) une colonne de distillation, pour séparer l'air refroidi en une fraction de tête formée par de l'azote gazeux essentiellement pur et une fraction de queue formée par du liquide enrichi en oxygène, la colonne comportant une sortie pour l'azote en communication avec l'échangeur de chaleur ;
d) un condenseur destiné à condenser au moins partiellement un courant de la tête gazeuse formée par de l'oxygène ou comportant de l'oxygène, afin de former un courant d'azote liquide, la condensation étant réalisée par échange indirect de chaleur avec un courant de la fraction de queue formée par du liquide enrichi en oxygène, afin de former un courant de gaz enrichi en oxygène ;
e) un premier moyen de recyclage, pour faire revenir vers la colonne de distillation, à titre de reflux, une proportion majeure du courant d'azote liquide provenant du condenseur et qui est renvoyé à la colonne de distillation ;
f) un second compresseur, pour augmenter la pression d'une première partie du courant gazeux enrichi en oxygène ; et
g) un second moyen de recyclage pour faire revenir le courant de gaz enrichi en oxygène, et qui est sous pression accrue, vers le bas de la colonne de distillation, ce qui permet d'augmenter le taux de récupération de l'azote produit ; aucun moyen n'existant, pour modifier la composition du gaz enrichi en oxygène, entre la colonne de distillation et l'entrée du second compresseur, ou entre la sortie du second compresseur et la colonne de distillation ;
l'azote produit étant, en service, récupéré à partir dudit échangeur de chaleur ; l'appareil comprenant en outre un turbodétendeur pour détendre une seconde partie du courant gazeux enrichi en oxygène ; le second compresseur est couplé au turbodétendeur de manière à, en utilisation, utiliser au moins une partie du travail disponible à la sortie et obtenu à partir du turbodétendeur pour comprimer la première partie du courant gazeux enrichi en oxygène, qui est recyclée vers le bas de la colonne de distillation ; et le second compresseur est situé dans l'appareil en une position telle qu'en service, il reçoit du gaz, enrichi en oxygène, à une température cryogénique.

9. Appareil selon la revendication 8, dans lequel le second compresseur est couplé au turbodétendeur, par l'intermédiaire d'un frein dissipateur.

10. Appareil selon la revendication 8 ou 9, dans lequel le second compresseur est situé en amont de l'extrémité froide de l'échangeur de chaleur et en aval de la sortie du condenseur destinée au (passage de) courant de gaz riche en oxygène.

## Revendications (Revendications pour l'(les) Etat(s) contractant(s) suivant(s): FR, DE, IT, NL)

1. Procédé pour la récupération d'azote essentiellement pur produit sous une pression supérieure à la pression atmosphérique, à partir d'air, le procédé comprenant les étapes consistant à :
a) comprimer de l'air gazeux d'alimentation ;
b) refroidir l'air comprimé, dans un échangeur de chaleur, par échange de chaleur avec des courants enrichi en oxygène et d'azote produit ;
c) introduire l'air, refroidi et comprimé, dans un étage intermédiaire d'une colonne unique de distillation ;
d) séparer dans la colonne l'air en une fraction de tête formée d'azote gazeux essentiellement pur et une fraction de queue formée d'un liquide enrichi en oxygène, et soutirer de la colonne un courant de chaque fraction ;
e) envoyer la quasi-totalité du courant de queue, qui est un liquide enrichi en oxygène, et une partie du courant de tête, comportant de l'azote gazeux, vers un condenseur et les y soumettre à un échange indirect de chaleur entre le courant de queue et le courant de tête, ce qui provoque l'ébullition du liquide enrichi en oxygène pour former un courant de gaz enrichi en oxygène et la condensation de l'azote gazeux pour former un courant d'azote liquide ;
f) recycler au moins une majeure partie du courant d'azote liquide résultant que l'on envoie, à titre de reflux, vers le sommet de la colonne de distillation ;
g) introduire une première partie du courant de gaz enrichi en oxygène, à une température cryogénique, dans un compresseur, comprimer cette première partie du courant gazeux enrichi en oxygène, et recycler la première partie, comprimée, du courant gazeux enrichi en oxygène en l'envoyant vers le bas de la colonne de distillation, ce qui augmente le taux de récupération de l'azote produit à partir de l'air ;
h) réchauffer le reste du courant de tête, comprenant de l'azote gazeux, dans l'échangeur de chaleur, par ledit échange de chaleur avec l'air comprimé ;
i) récupérer, à partir de l'échangeur de chaleur, le courant de tête chauffé, formé d'azote, à titre d'azote essentiellement pur obtenu comme produit ;
j) effectuer une turbodétente d'une seconde partie dudit courant gazeux enrichi en oxygène dans un moyen de détente, ce qui engendre à la sortie de ce moyen du travail ; et
k) utiliser une partie du travail disponible à la sortie et obtenu à partir du moyen de détente pour comprimer la première partie du courant gazeux enrichi en oxygène, qui est recyclée vers le bas de la colonne de distillation.

2. Procédé selon la revendication 1, comprenant en outre le réchauffage d'une troisième partie du courant gazeux enrichi en oxygène, dans l'échangeur de chaleur, par échange de chaleur avec l'air comprimé en amont de la combinaison avec ladite seconde partie et détente de la combinaison.

3. Procédé selon la revendication 1 ou 2, dans lequel une partie seulement de la seconde partie subit une turbodétente cependant que le reste de la seconde partie contourne le moyen de réalisation d'une détente.

4. Procédé selon l'une quelconque des revendications précédentes, dans lequel la première partie du courant gazeux enrichi en oxygène, de l'étage (g) commence sa compression à une température voisine de celle de la colonne de distillation.

5. Procédé selon l'une quelconque des revendications précédentes, comprenant en outre l'enlèvement, du procédé, d'une partie du travail disponible à la sortie du moyen assurant une détente.

6. Procédé selon la revendication 5, dans lequel la partie de travail disponible à la sortie (du moyen de détente) que l'on enlève est transférée à l'environnement, sous forme de chaleur ou de travail.

7. Procédé selon l'une quelconque des revendications 1 à 4, dans lequel la totalité du travail disponible à la sortie sert à comprimer la première partie du courant gazeux enrichi en oxygène, qui est recyclée vers le bas de la colonne de distillation, le procédé comprenant en outre l'addition d'une réfrigération, provenant d'une source externe, que l'on introduit dans le procédé.

8. Procédé selon la revendication 7, dans lequel l'étape d'addition d'une réfrigération introduite dans le procédé comprend l'addition d'azote liquide à la colonne de distillation.

9. Appareil pour la production d'azote obtenu comme produit à partir de l'air, cet appareil comprenant :
a) un premier compresseur, destiné à augmenter la pression de l'air gazeux d'alimentation ;
b) un échangeur de chaleur, destiné à soumettre l'air, sous pression élevée, à du refroidissement réalisé à l'aide des produits, de l'azote et un produit enrichi en oxygène, obtenu à partir de l'air d'alimentation distillé ;
c) une colonne de distillation, pour séparer l'air refroidi en une fraction de tête formée par de l'azote gazeux essentiellement pur et une fraction de queue formée par du liquide enrichi en oxygène, la colonne comportant une sortie pour l'azote en communication avec l'échangeur de chaleur ;
d) un condenseur destiné à condenser au moins partiellement un courant de la tête gazeuse formée par de l'oxygène ou comportant de l'oxygène, afin de former un courant d'azote liquide, la condensation étant réalisée par échange indirect de chaleur avec un courant de la fraction de queue formée par du liquide enrichi en oxygène, afin de former un courant de gaz enrichi en oxygène ;
e) un premier moyen de recyclage, pour faire revenir à titre de reflux une proportion majeure du courant d'azote liquide provenant du condenseur et qui est renvoyé à la colonne de distillation ;
f) un second compresseur, pour augmenter la pression d'une première partie du courant gazeux enrichi en oxygène, le second compresseur étant placé en une position telle qu'en service il reçoive du gaz enrichi en oxygène, à une température cryogénique ; et
g) un second moyen de recyclage pour faire revenir le courant de gaz enrichi en oxygène, et qui est sous pression accrue, vers le bas de la colonne de distillation, ce qui augmente le taux de récupération de l'azote produit ; l'azote produit étant, en service, récupéré à partir dudit échangeur de chaleur, et l'appareil comprenant de plus un turbodétendeur pour détendre une seconde partie du courant gazeux enrichi en oxygène, le second compresseur étant couplé au turbodétendeur de manière à, en service, utiliser au moins une partie du travail disponible à la sortie et obtenu à partir du turbodétendeur pour comprimer la première partie du courant gazeux enrichi en oxygène, qui est recyclée vers le bas de la colonne de distillation.

10. Appareil selon la revendication 9, dans lequel le second compresseur est couplé au turbodétendeur par l'intermédiaire d'un frein dissipateur.

11. Appareil selon la revendication 9 ou 10, dans lequel le second compresseur est situé en amont de l'extrémité froide de l'échangeur de chaleur et en aval de la sortie du condenseur destinée au courant de gaz riche en oxygène.
